(19) Europäisches Patentamt / European Patent Office / Office européen des brevets

(11) **EP 4 034 370 B1**

(12) **FASCICULE DE BREVET EUROPEEN**

(45) Date de publication et mention
de la délivrance du brevet:
**15.11.2023 Bulletin 2023/46**

(21) Numéro de dépôt: **20790372.5**

(22) Date de dépôt: **24.09.2020**

(51) Classification Internationale des Brevets (IPC):
**B29C 64/153** *(2017.01)* **B29C 64/386** *(2017.01)*
**B33Y 10/00** *(2015.01)* **B33Y 30/00** *(2015.01)*
**B33Y 50/00** *(2015.01)* **B22F 3/105** *(2006.01)*

(52) Classification Coopérative des Brevets (CPC):
**B29C 64/153; B22F 10/366; B22F 10/368;**
**B29C 64/386; B33Y 10/00; B33Y 30/00;**
**B33Y 50/00;** G06F 30/20; G06F 2113/10;
G06F 2119/06; Y02P 10/25

(86) Numéro de dépôt international:
**PCT/FR2020/051665**

(87) Numéro de publication internationale:
**WO 2021/058913 (01.04.2021 Gazette 2021/13)**

(54) **PROCÉDÉ DE DÉTERMINATION DE TRAJECTOIRE SUIVIE PAR UN FAISCEAU LASER DE FABRICATION ADDITIVE SÉLECTIVE D'UN OBJET TRIDIMENSIONNEL**

VERFAHREN ZUR BESTIMMUNG DER VON EINEM LASERSTRAHL VERFOLGTEN TRAJEKTORIE FÜR DIE SELEKTIVE ADDITIVE HERSTELLUNG EINES DREIDIMENSIONALEN OBJEKTS

METHOD FOR DETERMINING THE TRAJECTORY FOLLOWED BY A LASER BEAM FOR THE SELECTIVE ADDITIVE MANUFACTURE OF A THREE-DIMENSIONAL OBJECT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.09.2019 FR 1910742**

(43) Date de publication de la demande:
**03.08.2022 Bulletin 2022/31**

(73) Titulaires:
• **AddUp**
**63118 Cébazat (FR)**
• **CENTRE NATIONAL DE LA RECHERCHE SCIENTIFIQUE (CNRS)**
**75016 Paris (FR)**
• **Ecole Normale Supérieure Paris-Saclay**
**91190 Gif-sur-Yvette (FR)**

(72) Inventeurs:
• **WALRAND, Gilles**
**63118 CÉBAZAT (FR)**
• **TOURNIER, Christophe**
**92160 ANTONY (FR)**
• **LAVERNHE, Sylvain**
**91400 SACLAY VAL D'ALBIAN (FR)**
• **ETTAIEB, Kamel**
**94230 CACHAN (FR)**

(74) Mandataire: **Barascou, Frédéric**
**Manufacture Française des Pneumatiques Michelin**
**23, place des Carmes-Déchaux**
**DCJ/PI - F35 - Site de Ladoux**
**63040 Clermont-Ferrand Cedex 9 (FR)**

(56) Documents cités:
EP-A1- 3 498 401     WO-A1-2012/102655
US-A1- 2018 370 144     US-A1- 2019 054 567
US-A1- 2019 217 416     US-A1- 2019 275 585

**EP 4 034 370 B1**

**Description**

**DOMAINE DE L'INVENTION**

La présente invention concerne le domaine général de la fabrication additive sélective.

**ETAT DE LA TECHNIQUE**

La fabrication additive sélective consiste à réaliser des objets tridimensionnels par consolidation de zones sélectionnées sur des strates successives de matériau pulvérulent (poudre métallique, poudre de céramique, etc...). Les zones consolidées correspondent à des sections successives de l'objet tridimensionnel. La consolidation se fait par exemple couche par couche, par une fusion sélective totale ou partielle réalisée avec une source de puissance.

Classiquement, on utilise comme source pour réaliser la fusion des couches de poudre des sources laser de forte puissance ou des sources de faisceau d'électrons.

Dans le cas d'un procédé de fabrication d'un objet tridimensionnel utilisant une source laser de forte puissance, il est possible de définir la trajectoire de balayage laser comme l'ensemble des chemins adjacents parcourus par le faisceau laser dans chaque couche de poudre, le long desquels la matière est fondue pour définir le contour et remplir l'intérieur de la pièce.

La trajectoire de balayage laser présente un rôle important qui affecte, d'une part, la qualité géométrique et les propriétés mécaniques des pièces et d'autre part l'efficacité du processus, en termes de vitesse et de productivité.

Le pas de balayage est un paramètre important à définir avec la stratégie de balayage laser. Il représente la distance séparant deux chemins adjacents de la trajectoire.

En général, au cours de la fabrication d'une pièce par le procédé de fusion de poudre SLM (Selective Laser Melting), l'utilisation d'une trajectoire constituée de chemins adjacents séparés d'un pas de balayage fixe, peut provoquer certains problèmes.

Selon la forme de la trajectoire ou la géométrie de la pièce, il peut exister des zones isolées thermiquement, ce qui entraîne une accumulation de chaleur et l'apparition de zones en surchauffe.

L'augmentation de la température dans ces zones locales provoque d'importants gradients thermiques. Ces gradients conduisent à leur tour à l'apparition des contraintes résiduelles qui ont un effet négatif sur les caractéristiques mécaniques de la pièce.

Également, dans le cas de surchauffe, le régime de « keyhole » peut apparaître. Ce phénomène engendre la création des pores dans la pièce. En effet, dans ce cas, la profondeur du bain de fusion devient importante et la température atteint la température de vaporisation de la matière. Il en résulte une vaporisation et la formation de gaz au fond du bain qui y créent une pression de recul. À cause de l'instabilité et du refroidissement rapide du bain de fusion, les gaz formés ne peuvent pas s'échapper et se retrouvent emprisonnés dans la matière. Étant donnée la profondeur du pore formé, la fusion de la couche suivante ne permet pas de faire fondre la matière qui l'entoure et de libérer le gaz.

De plus, la pression de recul dans le bain de fusion fait apparaître l'effet Marangoni, ce qui entraîne l'apparition d'éclaboussures et l'éjection de matière en dehors du bain de fusion. Des billes de matière ainsi extraites se redéposent alors sur la surface déjà solidifiée et peuvent gêner le dépôt de la couche suivante, voire endommager le dispositif de dépôt de poudre et bloquer le processus de fabrication.

L'utilisation d'un pas de balayage très élevé, notamment dans le cas d'un matériau de faible conductivité thermique, peut donner lieu à des zones non fondues entre les chemins adjacents, ce qui provoque des pores dans la pièce. Ce problème influe directement les propriétés mécaniques des pièces obtenues et la qualité de leurs surfaces.

Dans le cas des procédés de fusion de lit de poudre par laser, le pas de balayage (p) est généralement calculé en fonction du diamètre du faisceau laser (D), selon la formule p = (1-λ)×D avec λ le coefficient de recouvrement. La valeur du coefficient de recouvrement est comprise entre 0 et 1.

*Représentation de deux chemins adjacents*

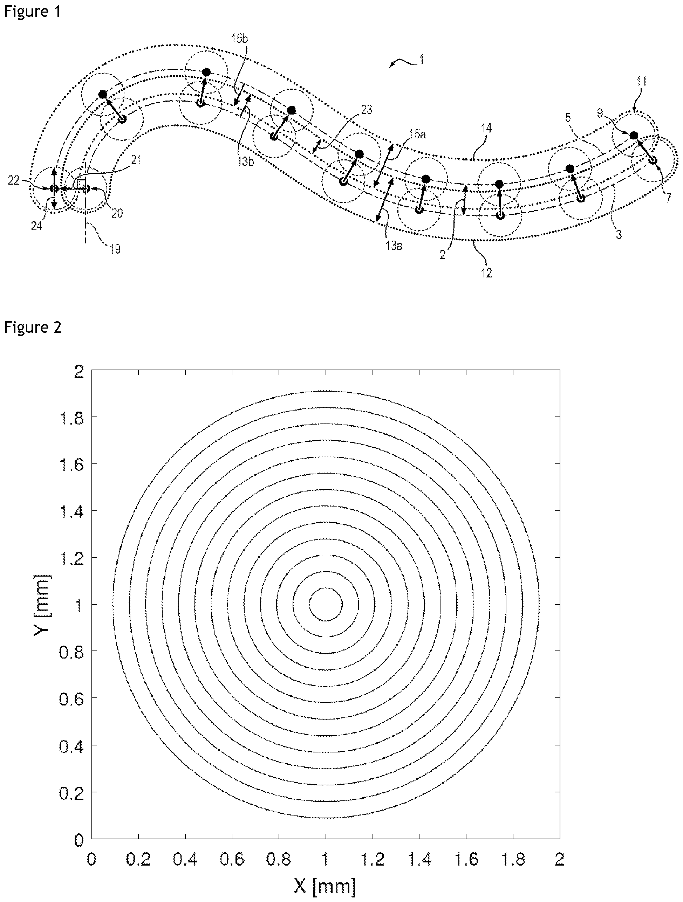

La figure 1 est une représentation schématique d'une trajectoire de balayage laser 1 constituée de deux chemins adjacents 3 et 5 dans le cas d'un pas de balayage constant 2 avec un faisceau laser de diamètre constant 24. La figure 1 correspond à un coefficient de recouvrement λ égal à 30 %. Pour un diamètre du faisceau laser 24 est égal à 100 μm, le pas de balayage 2 est égal à 70 μm.

Le faisceau laser est émis vers la couche de poudre et déplacé selon les chemins adjacents, de sorte que le point 9 du chemin adjacent 5 est à un certain moment éclairé par le spot laser 11.

Le spot laser est la tâche laser correspondant à une section transverse du faisceau laser située à l'intersection entre le faisceau laser et la couche de poudre.

Le laser apporte localement suffisamment d'énergie pour faire fondre la couche de poudre. Au cours du balayage la poudre est fondue au sein d'une région de fusion 12 de la couche de poudre entourant le chemin adjacent 3, et d'une région de fusion 14 de la couche de poudre entourant le chemin adjacent 5.

On peut caractériser la largeur transversale de la région 12 comme étant la largeur totale 13a dans une direction transverse à la direction de balayage du faisceau laser. La largeur transversale de la région 12 permet d'évaluer la dimension de la région 12 dans la direction orthogonale à la direction du chemin de référence qui est aussi la direction du balayage laser.

La largeur transversale de la région 14 est caractérisée par la largeur totale 15a.

Les chemins adjacents sont séparés du pas de balayage 2. Au point 20 du chemin adjacent 3, il est représenté la tangente 19 au chemin adjacent 3. Le vecteur 21 est orthogonal à la tangente 19 et de longueur égale au pas de balayage 2. Le vecteur 21 permet de passer du point 20 du chemin adjacent 3 au point 22 du chemin adjacent 5. Les chemins 3 et 5 sont reliés dans leur ensemble par ce type de construction locale, et la longueur du vecteur permettant de passer d'un point du chemin 3 à un point du chemin 5 reste constante et égale au pas 2.

Compte tenu du pas 2 séparant les chemins 3 et 5 et compte tenu des largeurs 13b et 15b des régions 12 et 14, il existe un chevauchement 23 entre les régions 12 et 14.

Le chevauchement 23 est une longueur transversale d'une partie d'une région de fusion ou d'une zone de fusion. C'est une longueur transversale de la partie de la couche de poudre qui a été fondue lors du passage du faisceau laser sur le premier chemin 3 et refondue lors du passage du faisceau laser sur le deuxième chemin 5. Autrement dit, le chevauchement est une longueur transversale de la partie commune entre les régions de fusion entourant deux chemins adjacents. Le chevauchement doit être évalué localement, car il ne prend pas une valeur constante tout au long des chemins adjacents.

Sur la figure 1, le chevauchement 23 est une longueur transversale de la partie commune des régions de fusion 12 et 14.

Le taux de chevauchement entre deux chemins adjacents est égal au rapport du chevauchement 23 sur la largeur transversale du chemin adjacent balayé en premier par le faisceau laser, ici la largeur totale 13a.

D'une manière générale, on peut noter les chemins adjacents sous la forme $T_i$ indicés par i dans l'ordre chronologie de balayage par le faisceau laser.

Un j-ème point du chemin $\mathbf{T_i}$ peut être noté $T_{ij}$ et repéré par un vecteur position

$$\vec{T}_{ij}$$

Avec un pas de balayage constant p, une relation lie des points $T_{ij}$ et $T_{i+1j}$ situés l'un en regard de l'autre, sous la forme

$$\vec{T}_{i+1j} \;=\; \vec{T}_{ij} + p\,\vec{n}_{ij}$$

, avec

$$\vec{n}_{ij}$$

un vecteur unitaire localement orthogonal au chemin $T_i$ au point $T_{ij}$, compris dans le plan de la couche de poudre et dirigé du chemin $T_i$ vers le chemin $T_{i+1}$,

Pour le cas d'une trajectoire à pas fixe, la valeur et l'inhomogénéité du taux de chevauchement dépend du matériau, des paramètres du procédé et de la géométrie de la trajectoire.

Par exemple, le balayage d'une surface d'un premier matériau et le balayage d'une autre surface d'un deuxième matériau d'une conductivité plus importante selon les mêmes paramètres de trajectoire et en particulier le même pas fixe correspondant à un même coefficient de recouvrement génère un taux de chevauchement différent dans chaque cas.

La région de fusion est plus large dans le cas du deuxième matériau, menant ainsi à un taux de chevauchement plus important.

Concernant l'inhomogénéité du taux de chevauchement, la présence de courbures entraîne une accumulation de chaleur et mène ainsi à une augmentation de la largeur transversale de la région de fusion. Ceci génère un taux de chevauchement plus important dans cette zone locale de courbure.

*Cas d'une trajectoire formée de cercles concentriques*

La figure 2 représente de manière schématique une trajectoire de balayage laser choisie pour fabriquer une pièce présentant une forme de disque. Il s'agit d'une trajectoire constituée de chemins adjacents circulaires et concentriques. Les chemins adjacents sont régulièrement espacés d'un pas constant égal à 70 $\mu$m.

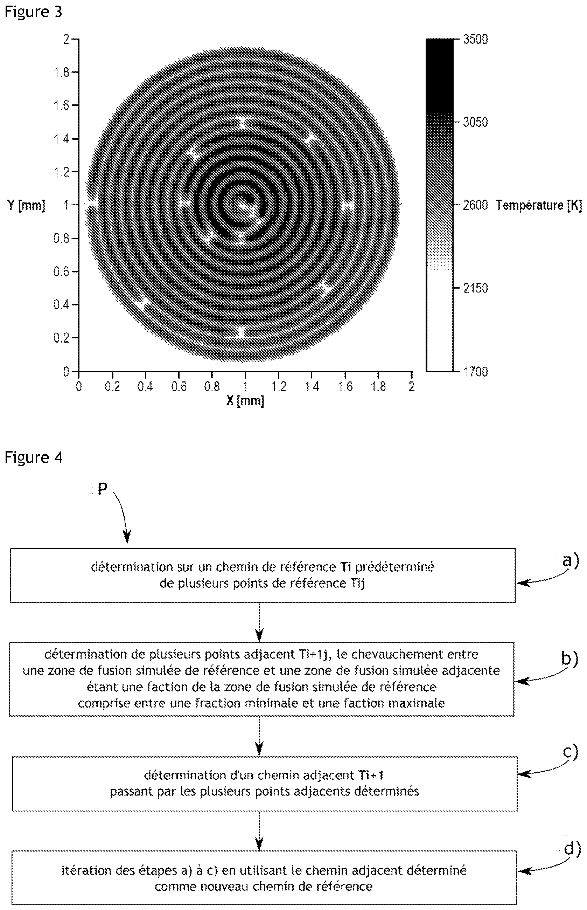

La figure 3 représente de manière schématique un champ de température maximale atteinte par la poudre, au fur et à mesure de son balayage par un faisceau laser selon la trajectoire de balayage laser représentée à la figure 2. Le premier chemin adjacent balayé par le faisceau laser est situé au centre de la pièce.

La vitesse de balayage et la puissance du laser sont constantes au cours du balayage.

La figure 3 est générée par simulation numérique de la température au cours du procédé de fabrication.

Pour chaque point étudié, il est possible de générer une suite temporelle des températures prises par la poudre en ce point au cours du procédé.

Il est possible d'extraire de cette suite temporelle le maximum de ses valeurs, maximum qui correspond à la température maximale atteinte par la poudre au point étudié au cours du procédé.

Le champ de température maximale en chaque point de la surface représenté sur la figure 3 met en évidence l'influence de la trajectoire sur le comportement thermique au cours de la fabrication. La cartographie du champ de température maximale montre une température maximale plus importante au niveau du centre et moins importante au niveau des bords de la pièce. La température maximale enregistrée est égale à 3300 K et la valeur minimale est égale à 2000 K.

Il est possible de déterminer le taux de chevauchement obtenu avec cette trajectoire de balayage laser : le chevauchement varie entre 100 % au niveau du centre et 39 % au niveau des bords dans le cas de la figure 3.

Le résultat observé peut être expliqué par l'effet de la trajectoire sur la température de la poudre avant consolidation qui est une estimation de la température de la couche de poudre juste avant le passage du laser. Cette estimation caractérise, en un point de la couche de poudre, juste avant le passage du laser en ce point, la diffusion de l'énergie apportée par le faisceau laser au cours du balayage de la partie de la trajectoire de balayage laser située en amont du point.

Au début du balayage laser de la couche de poudre au niveau du centre de la pièce, les longueurs des chemins adjacents sont faibles de sorte qu'entre le passage du laser d'un chemin adjacent au chemin adjacent suivant, il s'écoule peu de temps et la température de la poudre avant consolidation est importante. Ceci concourt à une importante température maximale et une refonte à chaque balayage d'un chemin adjacent de toute la zone du centre de la pièce.

Plus loin dans la trajectoire de balayage laser, en s'éloignant du centre, les longueurs des chemins adjacents sont plus importantes de sorte qu'entre le passage du laser d'un chemin adjacent au chemin adjacent suivant, il s'écoule plus de temps et la température de la poudre avant consolidation est plus faible.

Ceci concourt à une température maximale plus faible, une stabilisation de la largeur transversale de la zone de fusion, c'est-à-dire qu'il y a moins d'éclaboussures de matière, et enfin un taux de chevauchement plus faible.

*Indicateurs de qualité de chevauchement*

Pour caractériser le chevauchement au long de la trajectoire, des indicateurs peuvent être définis dans l'objectif de déterminer et évaluer les zones de chevauchement optimal, les zones de surchauffe, c'est-à-dire des zones de chevauchement trop important, et les zones où il n'y a pas assez de fusion entre les zones de fusion adjacentes, c'est-à-dire des zones de chevauchement trop faibles.

L'indicateur de qualité optimale $I_{qop}$ permet d'évaluer les zones où le chevauchement est optimal. Le chevauchement est dit optimal lorsque le taux de chevauchement est compris dans un intervalle de tolérance défini entre une fraction minimale prédéterminée et une fraction maximale prédéterminée.

Il peut être estimé qu'un taux de chevauchement égal à 15 % suffit à assurer la continuité de la fonte de la couche de poudre d'un chemin adjacent au chemin adjacent suivant. On peut choisir l'intervalle de tolérance centré sur un taux de chevauchement cible égal à 15 %, la fraction minimale prédéterminée égale à 12 % et fraction maximale prédéterminée égale à 18 %.

L'indicateur de qualité optimale $I_{qop}$ est calculé comme le rapport de la longueur des portions des chemins adjacents où le taux de chevauchement est compris dans l'intervalle de tolérance, sur la longueur totale de la trajectoire.

L'indicateur de sur-qualité $I_{sq}$ est calculé comme le rapport de la longueur des portions des chemins adjacents où le taux de chevauchement est au-delà de l'intervalle de tolérance, sur la longueur totale de la trajectoire.

L'indicateur de non qualité $I_{nq}$ est calculé comme le rapport de la longueur des portions des chemins adjacents où le taux de chevauchement est en deçà de l'intervalle de tolérance, sur la longueur totale de la trajectoire.

Pour une trajectoire de balayage laser donnée, la somme de trois indicateurs est toujours égale à 100%. $I_{qop} + I_{sq} + I_{nq} = 100\%$.

Une trajectoire de balayage laser est optimale en termes de chevauchement quand l'indicateur $I_{qop}$ est égal à 100% et les autres indicateurs $I_{sq}$ et $I_{nq}$ valent zéro.

Dans le cas de trajectoire de balayage laser correspondant à la figure 3 et de pas constant égal à 70 $\mu$m, le taux de chevauchement minimal mesuré vaut 39 %. De ce fait, l'indicateur de sur-qualité $I_{sq}$ est égal à 100% et les autres indicateurs valent 0. C'est-à-dire que tout au long de la trajectoire il y a des zones de surchauffe.

Afin d'améliorer la qualité de la trajectoire, une première option consiste à augmenter le pas de balayage. La forme de la trajectoire en cercles concentriques est conservée, ces cercles étant plus espacés les uns des autres que dans le cas de la figure 2. Une nouvelle valeur du pas de balayage constant peut être calculée de façon à obtenir des zones où le taux de chevauchement est dans l'intervalle de tolérance et aucune zone où le taux de chevauchement est en dehors de l'intervalle de tolérance.

La valeur obtenue par calcul pour le nouveau pas de balayage est de 95 $\mu$m, plus importante que dans la trajectoire de balayage laser de la figure 2.

Cette fois, la température maximale enregistrée est égale à 3200 K et la température minimale est égale à 1750 K.

La mesure du taux de chevauchement permet d'établir la valeur des indicateurs : $I_{sq}$ = 50,91 % et $I_{qop}$ = 49,09 %.

Seules deux types de zones sont représentées, des zones de sur qualité et des zones de qualité optimale. Il n'y a pas de zones de non qualité. L'augmentation du pas de balayage a amélioré le chevauchement, mais cela n'est pas satisfaisant.

Il est à noter qu'en utilisant des pas constants d'une valeur supérieure à 95 $\mu$m, des zones de non qualité apparaissent, ce qui produit au niveau de la couche de poudre des zones non fusionnées.

Il est à noter que des taux de chevauchement importants entraînent, en plus des zones de surchauffe, des éclaboussures et des défauts dans la pièce, et un temps de production plus important.

Il existe donc un besoin d'optimiser le chevauchement des chemins adjacents afin de garantir une distribution thermique plus homogène au sein de la couche de poudre tout en évitant les zones non fusionnées et en diminuant les temps de production.

Le document US 2019/054567 A1 décrit un système et une méthode fabrication additive de composants comprenant une première partie correspondant à un premier motif d'exposition de vecteurs de balayage et une seconde partie correspondant à un second motif d'exposition de vecteurs de balayage, la seconde partie étant positionnée de manière adjacente à la première partie, la seconde partie ayant une porosité supérieure à la porosité de la première partie.

EXPOSE DE L'INVENTION

Un but général de l'invention est de pallier les inconvénients des procédés de fabrication additive de l'art antérieur.

Notamment, un but de l'invention est de proposer une solution pour mieux contrôler le champ de température au cours du procédé et garantir une distribution thermique plus homogène au sein de la couche de poudre.

Un autre but de l'invention est de proposer une solution pour optimiser le chevauchement des chemins adjacents dans les trajectoires de balayage laser tout en évitant les zones non fusionnées.

Un autre but de l'invention est de proposer une solution pour diminuer les temps de production.

Le but est atteint dans le cadre de la présente invention grâce à un procédé de détermination de trajectoire suivie par un faisceau laser de fabrication additive sélective d'un objet tridimensionnel, le faisceau laser étant destiné à être émis vers une couche de poudre et déplacé selon une trajectoire constituée d'une pluralité de chemins adjacents pour provoquer une fusion de la couche de poudre, les chemins étant déterminés en mettant en oeuvre les étapes suivantes :

a) détermination sur un chemin de référence prédéterminé de plusieurs points de référence,
b) détermination de plusieurs points adjacents situés d'un même côté du chemin de référence, chaque point adjacent étant associé à un point de référence et étant tel qu'une zone de fusion adjacente simulée qui entoure ledit point adjacent et une zone de fusion de référence simulée qui entoure le point de référence ont un chevauchement correspondant à une fraction d'une largeur transversale de la zone de fusion de référence simulée qui est comprise entre une fraction minimale prédéterminée et une fraction maximale prédéterminée,
c) détermination d'un chemin adjacent passant par les plusieurs points adjacents déterminés,
d) itération des étapes a) à c) en utilisant le chemin adjacent déterminé comme nouveau chemin de référence, de façon à déterminer à chaque itération un nouveau chemin adjacent, l'ensemble des chemins adjacents ainsi déterminés définissant la trajectoire destinée à être suivie par le faisceau laser, ladite trajectoire étant mémorisée et/ou transmise à une unité de contrôle d'un appareil de fabrication additive sélective.

Un tel procédé est avantageusement complété par les différentes caractéristiques suivantes prises seules ou en combinaison :

la détermination de plusieurs points adjacents comprend successivement pour chaque point adjacent dans un sens de parcours de la trajectoire les étapes suivantes :

EP 4 034 370 B1

- estimation pour le point de référence associé au point adjacent d'une largeur transversale de la zone de fusion simulée de référence,
- détermination d'une position possible du point adjacent, la distance séparant la position possible du point adjacent de la position du point de référence étant égale au produit de la largeur transversale de la zone de fusion simulée de référence et d'un taux de chevauchement cible prédéterminé, le point adjacent étant placé par rapport au point de référence dans une direction orthogonale au chemin de référence au point de référence comprise dans le plan de la couche de poudre et dirigé du chemin de référence vers le chemin adjacent,
- réalisation de la boucle d'étapes secondaires suivantes :

  -- estimation d'une largeur transversale possible de la zone de fusion adjacente simulée,
  -- estimation d'un chevauchement possible entre la zone de fusion simulée de référence et la zone de fusion adjacente simulée,
  -- reprise de la boucle d'étapes secondaires en modifiant la position possible du point adjacent si le chevauchement possible estimé correspond à une fraction de la zone de fusion de référence simulée inférieure à la fraction minimale prédéterminée ou supérieure à la fraction maximale prédéterminée ;

une détermination d'un écart entre le chevauchement possible estimé et un chevauchement cible égal au produit de la largeur transversale de la zone de fusion simulée de référence et du taux de chevauchement cible ;

le taux de chevauchement cible vaut 15%, la fraction minimale vaut 12% et la fraction maximale vaut 18% ;

pour estimer un chevauchement possible entre la zone de fusion simulée de référence et la zone de fusion adjacente simulée, on détermine la demi-somme d'une largeur transversale de la zone de fusion simulée de référence et d'une largeur transversale possible de la zone de fusion adjacente simulée soustraite de la distance séparant la position possible du point adjacent et la position du point de référence ;

lors de la reprise de la boucle d'étapes secondaires, la position possible du point adjacent est modifiée de sorte que la distance séparant la position possible du point adjacent et la position du point de référence est remplacée par la différence entre ladite distance et l'écart entre le chevauchement possible estimé et le produit de la largeur transversale de la zone de fusion simulée de référence et du taux de chevauchement cible ;

l'estimation d'une largeur transversale d'une zone de fusion simulée qui entoure un point d'étude situé sur la couche de poudre, comprend les étapes suivantes :

- détermination de plusieurs points de calcul, les points de calcul étant des points de la couche de poudre situés dans un voisinage du point d'étude,
- estimation d'une température maximale atteinte en chacun des points de calcul, l'estimation dépendant de variations de température dues à l'émission d'un faisceau laser de sorte à consolider des zones de la couche de poudre entourant des points amont situés sur la pluralité de chemins en amont d'un passage du faisceau laser au point d'étude, l'estimation dépendant d'une variation de température de la poudre au point de calcul due à l'émission d'un faisceau laser de sorte à consolider une zone de la couche de poudre entourant le point d'étude,
- comparaison de la température maximale atteinte ainsi estimée avec la température de fusion de la poudre,
- identification parmi les points de calcul de points fondus pour lesquels l'estimation de la température maximale atteinte est supérieure ou égale à la température de fusion de la poudre,
- estimation d'une largeur transversale d'une zone occupée par lesdits points fondus ;

l'estimation d'une température maximale en un point de calcul comprend les étapes suivantes :

- calcul pour chaque point amont, d'une estimation d'une variation de température de la poudre au point de calcul due à l'émission d'un faisceau laser de sorte à consolider une zone de la couche de poudre entourant le point amont,
- calcul d'une estimation de variations de température de la poudre au point de calcul due à l'émission d'un faisceau laser de sorte à consolider des zones de la couche de poudre entourant des points amont,
- calcul d'une estimation d'une variation de température de la poudre au point de calcul due à l'émission d'un faisceau laser de sorte à consolider une zone de la couche de poudre entourant le point d'étude,
- calcul d'une estimation d'une température de la poudre au point de calcul dépendant des estimations des variations de température dues à l'émission d'un faisceau laser de sorte à consolider des zones de la couche de poudre entourant le point d'étude ou des points amont,

- calcul d'une estimation d'une température maximale au point de calcul ; l'estimation, pour chaque point amont, d'une estimation d'une variation de température de la poudre au point de calcul due à l'émission d'un faisceau laser de sorte à consolider une zone de la couche de poudre entourant le point amont comprend les étapes suivantes :
    - calcul pour chaque point amont d'une distance séparant le point d'étude et ledit point amont,
    - comparaison de ladite distance à une distance de voisinage spatial prédéterminée,
    - estimation à zéro, pour chaque point amont séparé du point d'étude d'une distance supérieure à la distance de voisinage spatial, d'une variation de température de la poudre au point de calcul due à l'émission d'un faisceau laser de sorte à consolider une zone de la couche de poudre entourant le point amont ; l'estimation, pour chaque point amont, d'une estimation d'une variation de température de la poudre au point de calcul due à l'émission d'un faisceau laser de sorte à consolider une zone de la couche de poudre entourant le point amont comprend les étapes suivantes :
    - calcul pour chaque point amont d'une durée séparant l'émission d'un faisceau laser de sorte à consolider une zone de la couche de poudre entourant le point amont et le passage du faisceau laser au point d'étude,
    - comparaison de ladite durée à une durée de voisinage temporel prédéterminée,
    - estimation à zéro, pour chaque point amont dont la durée calculée est supérieure à la durée de voisinage temporel, d'une variation de température de la poudre au point de calcul due à l'émission d'un faisceau laser de sorte à consolider une zone de la couche de poudre entourant le point amont.

L'invention porte également sur un procédé de fabrication additive sélective d'un objet tridimensionnel à partir d'une couche de poudre, le procédé comprenant, dans un appareil de fabrication additive sélective, les étapes suivantes :

- application d'une couche de poudre de fabrication additive sur un support ou sur une couche préalablement consolidée,
- émission d'un faisceau laser sur la couche de poudre suivant une trajectoire constituée d'une pluralité de chemins adjacents, le passage du faisceau laser sur ces chemins provoquant une fusion de la couche de poudre,

la trajectoire étant déterminée en mettant en oeuvre un procédé de détermination de trajectoire tel qu'on l'a présenté précédemment, ladite trajectoire étant mémorisée et/ou transmise à une unité de contrôle de l'appareil de fabrication additive sélective.

L'invention porte également sur un appareil de fabrication additive sélective d'un objet tridimensionnel à partir d'une couche de poudre, l'appareil comprenant :

un réservoir de poudre situé au-dessus d'un plateau horizontal,
un arrangement pour la distribution de ladite poudre métallique sur le plateau adapté pour étaler successivement plusieurs couches de poudre,
une source de type laser et une unité de contrôle adaptée pour commander la source de type laser de façon à émettre un faisceau laser sur la couche de poudre suivant une trajectoire constituée d'une pluralité de chemins adjacents, le passage du faisceau laser sur ces chemins provoquant une fusion de la couche de poudre, des moyens de mémoire dialoguant avec l'unité de contrôle et dans lesquels est mémorisée une trajectoire déterminée en mettant en oeuvre un procédé de détermination de trajectoire tel qu'on vient de le présenter.

Un tel appareil peut être avantageusement complété par un calculateur adapté pour mettre en oeuvre un procédé de détermination de trajectoire tel qu'on l'a présenté précédemment.
Enfin l'invention porte sur un programme d'ordinateur comprenant des instructions adaptées à la mise en oeuvre d'au moins une des étapes du procédé de détermination de trajectoire tel qu'on l'a présenté précédemment lorsque ledit programme est exécuté sur un ordinateur.

## PRESENTATION DES FIGURES

D'autres caractéristiques et avantages de l'invention ressortiront encore de la description qui suit, laquelle est purement illustrative et non limitative, et doit être lue en regard des dessins annexés sur lesquels :

La figure 1, déjà présentée, est une représentation schématique d'une trajectoire de balayage laser comprenant deux chemins adjacents ;
La figure 2, déjà présentée, est une représentation schématique d'une trajectoire de balayage laser selon une technique connue de l'art antérieur ;

La figure 3, déjà présentée, représente de manière schématique un champ de température maximale atteinte par la poudre, lorsque la couche de poudre est balayée par un faisceau laser selon une technique connue de l'art antérieur ;

La figure 4 est une représentation schématique d'un procédé de détermination de trajectoire de balayage laser selon l'invention ;

La figure 5 est une représentation schématique d'un procédé de détermination de trajectoire de balayage laser selon l'invention ;

La figure 6 représente de manière schématique une trajectoire de balayage laser ;

La figure 7 représente de manière schématique le taux de chevauchement associé à une trajectoire de balayage laser ;

La figure 8 représente de manière schématique le pas de balayage associé à une trajectoire de balayage laser ;

La figure 9 représente de manière schématique un champ de température maximale atteinte par la poudre, lorsque la couche de poudre est balayée par un faisceau laser selon une trajectoire de balayage laser ;

La figure 10 est une représentation schématique d'une trajectoire de balayage laser selon une technique connue de l'art antérieur ;

Les figures 11 et 12 représentent de manière schématique le taux de chevauchement associé à des trajectoires de balayage laser selon une technique connue de l'art antérieur ;

La figure 13 est une représentation schématique d'une trajectoire de balayage laser ;

La figure 14 représente de manière schématique le pas de balayage associé à une trajectoire de balayage laser ;

La figure 15 représente de manière schématique le taux de chevauchement associé à une trajectoire de balayage laser ;

La figure 16 est une représentation schématique d'une trajectoire de balayage laser selon une technique connue de l'art antérieur ;

La figure 17 représente de manière schématique le taux de chevauchement associé à une trajectoire de balayage laser selon une technique connue de l'art antérieur ;

La figure 18 est une représentation schématique d'une trajectoire de balayage laser ;

La figure 19 représente de manière schématique le pas de balayage associé à une trajectoire de balayage laser ;

Les figures 20 et 21 sont des représentations schématiques de zones de fusion simulées dans deux configurations de chevauchement distinctes ;

La figure 22 représente de manière schématique un procédé pour déterminer un voisinage spatial et un voisinage temporel d'un point de la couche de poudre ;

La figure 23 représente de manière schématique un voisinage spatial et un voisinage temporel d'un point de la couche de poudre ;

La figure 24 est une représentation schématique d'un appareil de fabrication additive conforme à un mode de réalisation possible de l'invention.

## DESCRIPTION D'UN OU PLUSIEURS MODES DE MISE EN ŒUVRE ET DE RÉALISATION

*Trajectoires adaptatives formées de chemins adjacents*

Il est proposé, tel que représenté sur la figure 4, un procédé qui permet de construire une trajectoire formée d'une pluralité de chemins adjacents qui sont déterminés de manière récursive. Le procédé permet de déterminer la trajectoire suivie par un faisceau laser de fabrication additive sélective d'un objet tridimensionnel, le faisceau laser étant destiné à être émis vers une couche de poudre et déplacé selon une trajectoire constituée d'une pluralité de chemins adjacents pour provoquer une fusion de la couche de poudre, les chemins étant déterminés en mettant en oeuvre les étapes suivantes :

a) détermination sur un chemin de référence $T_i$ prédéterminé de plusieurs points de référence $T_{ij}$,
b) détermination de plusieurs points adjacents $T_{i+1j}$ situés d'un même côté du chemin de référence, chaque point adjacent $T_{i+1j}$ étant associé à un point de référence $T_{ij}$ et étant tel qu'une zone de fusion adjacente simulée qui entoure ledit point adjacent $T_{i+1j}$ et une zone de fusion de référence simulée qui entoure le point de référence $T_{ij}$ ont un chevauchement correspondant à une fraction d'une largeur transversale de la zone de fusion de référence simulée qui est comprise entre une fraction minimale $\alpha min$ prédéterminée et une fraction maximale $\alpha max$ prédéterminée,
c) détermination d'un chemin adjacent $T_{i+1}$ passant par les points adjacents déterminés,
d) itération des étapes a) à c) en utilisant le chemin adjacent déterminé comme nouveau chemin de référence, de façon à déterminer à chaque itération un nouveau chemin adjacent, l'ensemble des chemins adjacents ainsi déterminés définissant la trajectoire destinée à être suivie par le faisceau laser, ladite trajectoire étant mémorisée et/ou transmise à une unité de contrôle d'un appareil de fabrication additive sélective.

Le chemin de référence $T_i$ est prédéterminé soit parce qu'il est choisi initialement au début du procédé soit parce qu'il a été déterminé au cours du procédé et qu'il est utilisé ensuite pour déterminer un nouveau chemin adjacent. Pour chaque point de référence il est procédé à la détermination d'un point adjacent. Le nombre de points de référence déterminés au sein du chemin de référence permet une plus ou moins bonne définition du chemin adjacent. Plus le nombre de points de référence choisis est important et mieux le chemin adjacent est défini. Le nombre de points de référence peut en particulier être choisi en fonction d'une longueur attendue du chemin adjacent.

Pour chaque point de référence, la détermination du point adjacent associé prend en compte deux zones de fusion simulées : une zone de fusion adjacente simulée qui entoure un point adjacent $T_{i+1j}$ et une zone de fusion de référence simulée qui entoure le point de référence $T_{ij}$. Il s'agit d'une estimation de la région de la couche de poudre entourant le point adjacent ou le point de référence qui passerait à l'état liquide si le laser balayait la trajectoire telle qu'elle a été déterminée.

Plus précisément, le procédé prend en compte le chevauchement entre les deux zones de fusion simulées de sorte que le taux de chevauchement estimé est compris entre une fraction minimale prédéterminée ($\alpha$min) et une fraction maximale ($\alpha$max) prédéterminée.

Le taux de chevauchement entre zones de fusion simulées est égal au rapport du chevauchement sur la largeur transversale de la zone de fusion associée au chemin adjacent balayé en premier par le faisceau laser, ici le chemin de référence.

L'estimation préalable des zones de fusion permet de placer un point adjacent par rapport à un point de référence de façon à obtenir un chevauchement dans un intervalle de tolérance.

Le chevauchement des régions de fusion générées au cours du procédé est ainsi optimisé. La refonte complète d'une zone déjà fondue lors d'un premier balayage laser ou la présence de parties de la couche de poudre non fondues peut être ainsi évitée.

Fixer la fraction maximale $\alpha$max permet de limiter les zones de surchauffe et fixer la fraction minimale $\alpha$min permet de limiter les zones non fondues. De cette manière, le contrôle de l'homogénéité du champ de température au cours du procédé de fabrication est augmenté.

Le procédé de détermination de trajectoire peut être précisé dans la détermination de plusieurs points adjacents $T_{i+1j}$, détermination qui peut comprendre successivement dans un sens de parcours de la trajectoire pour chaque point adjacent $T_{i+1j}$ les étapes suivantes :

- estimation pour le point de référence $T_{ij}$ associé au point adjacent $T_{i+1j}$ d'une largeur transversale $L_{ij}$ de la zone de fusion simulée de référence,
- détermination d'une position possible du point adjacent $T_{i+1j}$, la distance séparant la position possible du point adjacent $T_{i+1j}$ de la position du point de référence $T_{ij}$ étant égale au produit de la largeur transversale de la zone de fusion simulée de référence et d'un taux de chevauchement cible $\alpha$c prédéterminé, le point adjacent $T_{i+1j}$ étant placé par rapport au point de référence $T_{ij}$ dans une direction orthogonale au chemin de référence $T_i$ au point de référence $T_{ij}$ comprise dans le plan de la couche de poudre et dirigé du chemin de référence $T_i$ vers le chemin adjacent $T_{i+1}$,
- réalisation de la boucle d'étapes secondaires suivantes :

-- estimation d'une largeur transversale $L_{i+1j}$ possible de la zone de fusion adjacente simulée,
-- estimation d'un chevauchement possible entre la zone de fusion simulée de référence et la zone de fusion adjacente simulée,
-- reprise de la boucle d'étapes secondaires en modifiant la position possible du point adjacent $T_{i+1j}$ si le chevauchement possible estimé correspond à une fraction de la zone de fusion de référence simulée inférieure à la fraction minimale prédéterminée ou supérieure à la fraction maximale prédéterminée.

L'étape b) du procédé de détermination précédent peut être précisée tout d'abord en ce que cette détermination s'effectue successivement pour chaque point adjacent $T_{i+1j}$. C'est une fois un point adjacent déterminé, que le point adjacent suivant est déterminé, en particulier le point adjacent suivant selon un sens de parcours de la trajectoire de balayage laser par le laser.

Cette détermination comprend l'estimation d'une largeur transversale de la zone de fusion simulée de référence $L_{ij}$. Cette largeur transversale est la largeur transversale totale de la zone de fusion de référence dans la direction orthogonale du chemin de référence. Cette largeur transversale $L_{ij}$ dépend de la partie de la trajectoire de balayage laser située en amont du point de référence $T_{ij}$ : elle dépend de la température avant consolidation, dépendant de l'énergie apportée à la couche de poudre par le laser le long de la trajectoire en amont du point de référence et jusqu'au point de référence lui-même. Il n'est pas nécessaire de déterminer la position du point adjacent $T_{i+1j}$ pour estimer la

largeur transversale $L_{ij}$.

La détermination de la position du point adjacent $T_{i+1j}$ est effectuée de manière itérative. Il est calculé une position possible initiale du point adjacent $T_{i+1j}$ à partir de la largeur transversale de la zone de fusion simulée de référence $L_{ij}$ et d'un taux de chevauchement cible $\alpha c$ prédéterminé.

Le taux de chevauchement cible prédéterminé est un taux de chevauchement idéal qu'il est souhaitable d'atteindre. Comme déjà mentionné plus haut, il peut valoir 15 % et permettre d'assurer la continuité de la fonte de la couche de poudre d'un chemin adjacent au chemin adjacent suivant.

Le produit de la largeur transversale Lij par le taux de chevauchement cible $\alpha c$ donne la distance entre le point de référence $T_{ij}$ et la position possible initiale du point adjacent $T_{i+1j}$. Le point adjacent $T_{i+1j}$ est placé dans une direction orthogonale au chemin de référence $T_i$ au point de référence $T_{ij}$ comprise dans le plan de la couche de poudre et dirigé du chemin de référence $T_i$ vers le chemin adjacent $T_{i+1}$.

La position possible du point adjacent $T_{i+1j}$ est ensuite affinée de manière itérative au cours d'une boucle d'étapes secondaires. Plus précisément c'est la distance entre le point de référence $T_{ij}$ et le point adjacent possible $T_{i+1j}$ qui est ajustée, la position possible du point adjacent par rapport au point de référence $T_{ij}$ étant toujours placée dans une direction orthogonale au chemin de référence $T_i$ comprise dans le plan de la couche de poudre et dirigée du chemin de référence $T_i$ vers le chemin adjacent $T_{i+1}$.

La première étape secondaire consiste à estimer une largeur transversale possible de la zone de fusion adjacente simulée $L_{i+1j}$. Comme la détermination des points adjacents s'effectue successivement selon le sens de la trajectoire, la partie de la trajectoire située en amont du point adjacent en cours de détermination est fixée. Cela permet d'estimer la température avant consolidation, dépendant de l'énergie apportée à la couche de poudre par un laser balayant la trajectoire en amont du point adjacent en cours de détermination et l'énergie apportée à la couche de poudre par un laser balayant une suite possible de la trajectoire qui passe par la position possible du point adjacent. Connaissant cette énergie apportée, il est possible d'estimer une largeur transversale possible de la zone de fusion adjacente. Cette largeur transversale peut en particulier être une largeur transversale totale possible de la zone de fusion adjacente dans la direction orthogonale du chemin adjacent. Connaissant la largeur transversale $L_{ij}$ de la zone simulée de référence, une largeur transversale possible de la zone de fusion simulée adjacente, la position du point de référence et la position possible du point adjacent, il est procédé à une estimation d'un chevauchement possible entre la zone de fusion simulée de référence et la zone de fusion adjacente simulée.

Selon la valeur obtenue du chevauchement possible estimé, on réitère les étapes secondaires ou non.

Si le chevauchement possible estimé correspond à une fraction de la zone de fusion de référence simulée comprise entre la fraction minimale prédéterminée et la fraction maximale prédéterminée, alors la position possible du point adjacent est une position acceptable du point adjacent qui est validée. Il est procédé à la détermination du point adjacent suivant dans le sens du balayage de la trajectoire.

Sinon, les étapes secondaires sont réitérées en utilisant une nouvelle position possible du point adjacent. Cette nouvelle position peut en particulier prendre en compte la valeur obtenue du chevauchement possible estimé : si le chevauchement est trop important, la nouvelle position possible du point adjacent est plus éloignée du point de référence, si le chevauchement est trop faible, la nouvelle position possible du point adjacent est plus rapprochée du point de référence.

On peut introduire les notations suivantes : à la k-ème itération de la boucle d'étapes secondaires de détermination du point adjacent $T_{i+1j}$, $T_{i+1j}(k)$ est la position possible du point adjacent, $d_{ij}(k)$ la distance séparant le point de référence $T_{ij}$ et la position possible $T_{i+1j}(k)$ du point adjacent, $L_{i+1j}(k)$ la largeur transversale possible de la zone de fusion adjacente simulée, $L_{ij}\alpha_{ij}(k)$ le chevauchement possible estimé entre la zone de fusion simulée de référence et la zone de fusion adjacente simulée, et $\alpha_{ij}(k)$ le taux de chevauchement associé.

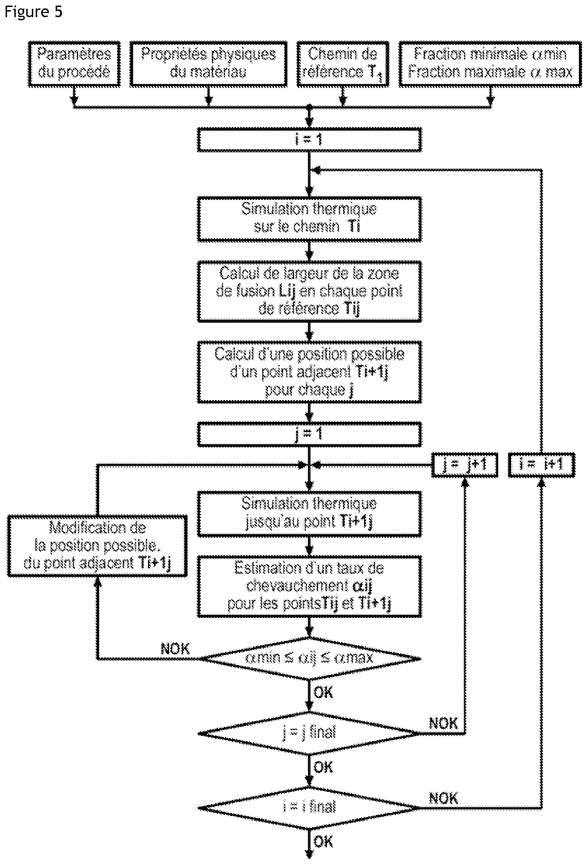

La figure 5 illustre un procédé tel qu'on vient de le présenter.

Initialement, il est nécessaire de disposer des paramètres du procédé (puissance du laser, rayon du faisceau laser ou section transverse du faisceau laser située à l'intersection entre le faisceau laser et la couche de poudre, vitesse de déplacement du faisceau laser le long de la trajectoire de balayage laser), des paramètres physiques du matériau (conductivité thermique, capacité thermique, densité, température de fusion), d'un premier chemin de référence, d'une fraction minimale $\alpha$min et d'une fraction maximale $\alpha$max.

Il est ensuite procédé à une simulation thermique sur le chemin $T_1$, c'est-à-dire d'une part au choix d'un certain nombre de points de référence $T_{1j}$, et d'autre part à l'estimation d'une zone de fusion simulée de référence pour chacun de ces points.

En particulier, les largeurs $L_{1j}$ des différentes zones de fusion sont estimées.

Il est ensuite procédé à la détermination d'une position possible initiale $T_{2j}(1)$ des points adjacents sur le chemin $T_2$ que l'on cherche à déterminer.

Pour le premier point adjacent, correspondant à j=1, c'est-à-dire le premier point du chemin $T_2$ à être balayé par le laser dans le sens de la trajectoire, une largeur transversale possible $L_{21}(1)$ de la zone de fusion simulée adjacente est estimée, c'est l'objet de la simulation thermique autour du point $T_{21}(1)$.

On peut en extraire l'estimation $\alpha_{21}(1)$ d'un taux de chevauchement que l'on compare à la fraction minimale $\alpha$min et à la fraction maximale $\alpha$max.

Si l'estimation $\alpha_{21}(1)$ prend une valeur entre ces bornes, alors on valide la position possible courante du point adjacent $T_{21}(1)$. Sinon, celle-ci est modifiée en une nouvelle position $T_{21}(2)$ et l'étape de simulation thermique pour le point adjacent $T_{21}$ ainsi que l'étape d'estimation du taux de chevauchement sont effectuées à nouveau.

Lorsque la position du point adjacent $T_{21}$ est validée, on incrémente la valeur de j c'est-à-dire que l'on passe au point adjacent suivant dans le sens de balayage du laser du chemin adjacent. Les étapes sont les mêmes, le point de référence utilisé étant cette fois le point $T_{12}$ et l'étape de simulation thermique autour du point $T_{22}$ prenant en compte la position du point adjacent $T_{21}$ que l'on a fixé précédemment.

Ainsi de suite les points adjacents sont déterminés dans le sens du balayage du chemin adjacent $T_2$.

Le nombre de points adjacents à déterminer est donné par le nombre de points de référence choisi initialement, il correspond à la valeur « j final » sur la figure 5. Lorsque tous les points adjacents sont déterminés, le chemin adjacent $T_2$ est déterminé à son tour.

Le procédé se poursuit en débutant la détermination d'un nouveau chemin adjacent dont le chemin de référence est le chemin adjacent dont on vient d'achever la détermination. Le procédé peut être interrompu lorsqu'un nombre « i final »de chemins a été déterminé.

Pour déterminer si le chevauchement estimé $L_{ij}\alpha_{ij}(k)$ correspond à une fraction de la zone de fusion de référence simulée comprise entre la fraction minimale prédéterminée $\alpha$min et la fraction maximale prédéterminée $\alpha$max, il est possible de calculer un écart entre le chevauchement possible estimé et un chevauchement cible égal au produit de la largeur transversale de la zone de fusion simulée de référence $L_{ij}$ et du taux de chevauchement cible $\alpha$c déjà présenté plus haut.

Lorsque l'écart est supérieur en valeur absolue au produit de la largeur transversale de la zone de fusion simulée de référence et d'un taux de chevauchement seuil prédéterminé $\alpha$s, le chevauchement possible estimé peut correspondre à une fraction de la zone de fusion de référence simulée inférieure à la fraction minimale $\alpha$min prédéterminée ou supérieure à la fraction maximale prédéterminée $\alpha$max.

Cette situation est possible lorsque d'une part la fraction maximale $\alpha$max est égale à la somme du taux de chevauchement cible $\alpha$c et du taux de chevauchement seuil $\alpha$s, et d'autre part la fraction minimale $\alpha$min est égale à la différence entre le taux de chevauchement cible $\alpha$c et du taux de chevauchement seuil $\alpha$s.

C'est notamment le cas en particulier lorsque la fraction maximale vaut $\alpha$max=18%, la fraction minimale vaut $\alpha$min=12% : on peut alors choisir un taux de chevauchement cible égal à $\alpha$c=15% et un taux de chevauchement seuil égal à $\alpha$s=3%.

*Application au cas d'une trajectoire formée de cercles concentriques*

Le procédé de détermination a été mis en oeuvre dans le cas d'une trajectoire formée de cercles concentriques présentée dans la section « État de la technique ».

Un premier cercle a été utilisé comme premier chemin de référence $T_1$, et le procédé a été utilisé pour déterminer des chemins adjacents suivants sous forme de cercles, chaque nouveau chemin adjacent étant à l'extérieur du chemin précédemment déterminé.

Le procédé a été mis en oeuvre avec les valeurs suivantes : la fraction maximale vaut $\alpha$max=18%, la fraction minimale vaut $\alpha$min=12%, le taux de chevauchement cible est égal à $\alpha$c=15% et le taux de chevauchement seuil est égal à $\alpha$s=3%.

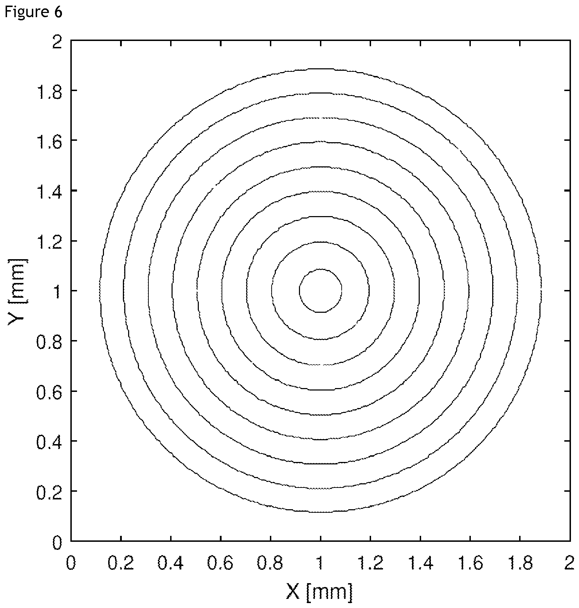

Le résultat de calcul de la trajectoire concentrique, de l'intérieur vers l'extérieur, est présenté sur la Figure 6.

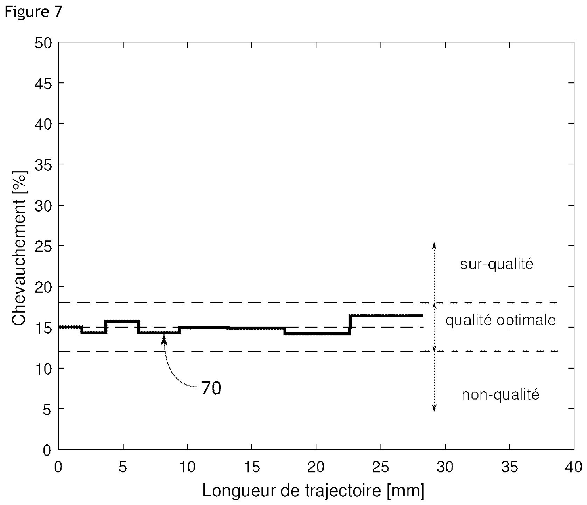

Le procédé de détermination permet d'obtenir une trajectoire adaptative correspondant à un taux de chevauchement toujours compris dans l'intervalle de tolérance entre la fraction minimale et la fraction maximale. La figure 7 représente le taux de chevauchement 70 en fonction de la longueur de la trajectoire formée des différents cercles concentriques. La longueur de la trajectoire correspond à une position curviligne sur la trajectoire formée des différents cercles en prenant en compte le sens de balayage de la trajectoire. Une longueur de trajectoire égale à zéro correspond au tout début du premier chemin $T_1$.

Cette situation correspond au cas idéal où l'indicateur de qualité optimale est égal à 1. De ce fait, la trajectoire adaptative a entraîné une iso-qualité en termes de chevauchement entre les zones de fusion entourant les chemins adjacents tout au long de la trajectoire.

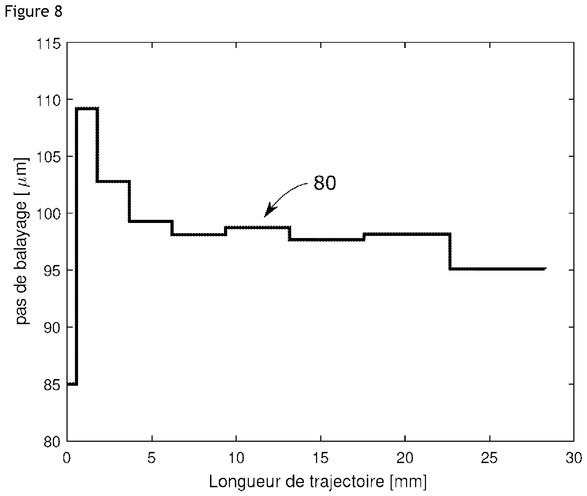

La figure 8 décrit l'évolution du pas de balayage de la trajectoire représentée à la figure 6. La courbe 80 représente la distance séparant un cercle du cercle extérieur suivant en fonction de la longueur de la trajectoire formée des différents cercles concentriques. Les sauts dans la courbe 80 traduisent le passage d'un cercle au cercle extérieur suivant. Le pas au début de la trajectoire est égal à 85 $\mu$m puis augmente jusqu'à 109 $\mu$m. En s'éloignant du centre, le pas de balayage diminue globalement jusqu'à 95 $\mu$m, ce qui correspond à une largeur transversale de la zone de fusion qui diminue.

De cette manière le chevauchement entre les zones de fusion est maintenu dans l'intervalle de tolérance.

Il est à noter que l'augmentation du pas de balayage pour certains cercles de la trajectoire permet de réduire la longueur totale de la trajectoire et donc de réduire le temps de production.

La table 1 présente une synthèse sur la longueur de trajectoire des différents cas envisagés pour le type de trajectoire formée de cercles concentriques.

| Type de trajectoire | pas fixe = 70 $\mu$m (Recette initiale) | pas fixe = 95 $\mu$m (Recette modifiée) | Trajectoire adaptative |
|---|---|---|---|
| Longueur totale de la trajectoire (mm) | 40,02 | 32,82 | 28,29 |

La trajectoire adaptative permet d'avoir un gain d'environ 29 % sur la longueur totale de la trajectoire par rapport à la recette initiale et un gain de 14 % par rapport à la recette avec un pas fixe de 95 $\mu$m.

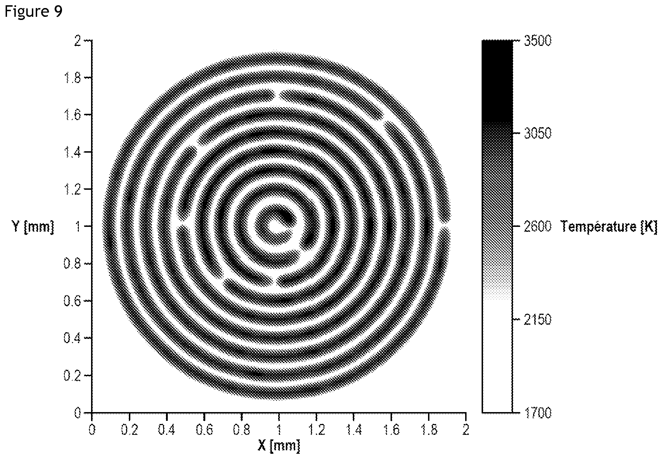

La Figure 9 présente le champ de température maximale atteinte par la poudre, lorsque la couche de poudre est balayée par un faisceau laser selon la trajectoire adaptative représentée à la figure 6.

La température maximale enregistrée est égale à 3150 K et la valeur minimale est égale à 1700 K.

Le maximum dans le champ de température maximale est diminué en comparaison au maximum de 3300 K obtenu dans la situation de la recette avec un pas fixe égal à 70 $\mu$m, illustrée sur la figure 3.

*Application au cas d'une trajectoire en forme de spirale*

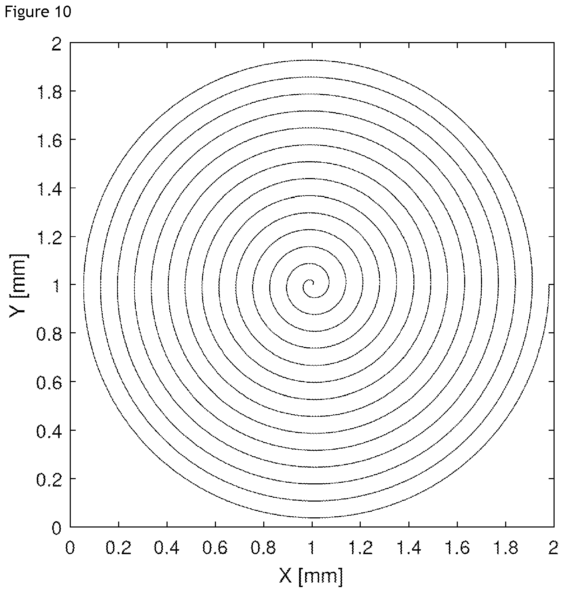

La figure 10 représente de manière schématique un autre type de trajectoire de balayage laser que l'on peut choisir pour fabriquer une pièce présentant une forme de disque. Il est possible de balayer une forme de disque par une trajectoire continue de type spirale. La figure 10 correspond à un pas de balayage égal à 70 $\mu$m. Le laser balaye la surface de l'intérieur vers l'extérieur.

Il est possible d'établir le champ de température de la poudre maximale atteinte dans la surface et de mesurer un maximum dans ce champ égal à 3300 K et un minimum égal à 2350 K.

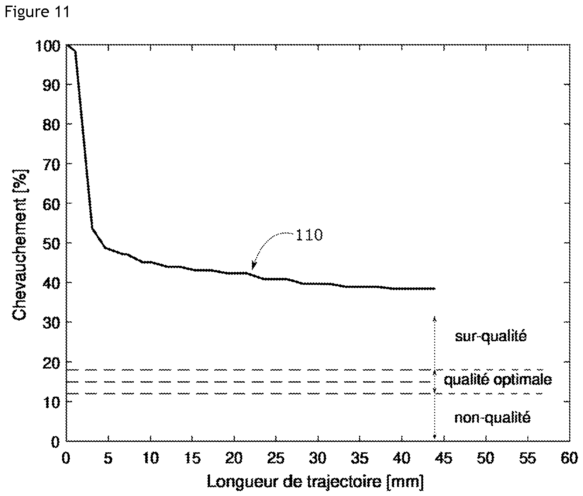

Dans le cas de la figure 10 et d'un pas de balayage de 70 $\mu$m, la mesure du taux de chevauchement pour la trajectoire représentée à la figure 10 est donnée par la courbe 110 sur la figure 11. Il varie de 100 % au début de la trajectoire (longueur de trajectoire égale à zéro) c'est-à-dire au centre de la spirale. Le taux de chevauchement diminue jusqu'à 40 % au niveau des bords extérieurs de la spirale. De ce fait, l'indicateur de sur-qualité est égal à 100 %.

Afin de diminuer le taux de chevauchement, il est possible d'utiliser un pas de balayage fixe plus important égal à 95 $\mu$m. Il est possible d'établir pour ce nouveau pas le champ de température de la poudre maximale atteinte dans la surface et de mesurer un maximum dans ce champ égal à 3200 K et un minimum égal à 1950 K.

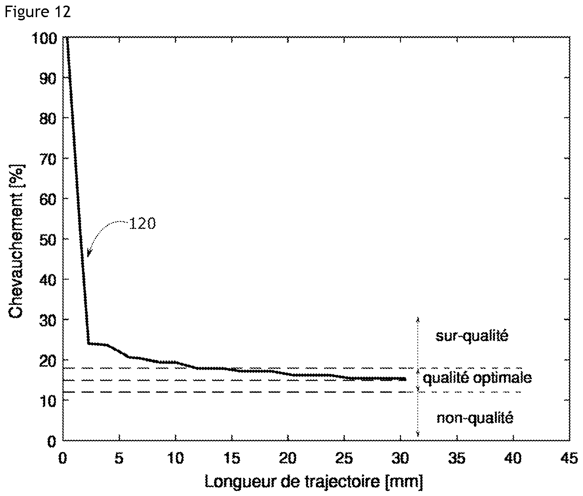

La Figure 12 représente schématiquement la mesure du taux de chevauchement 120 pour une trajectoire en spirale avec un pas constant égal à 95 $\mu$m. Le réglage du pas de balayage égal à 95 $\mu$m permet de réduire le taux de chevauchement au niveau des bords de la surface, c'est-à-dire pour des longueurs de trajectoire importantes. L'indicateur de qualité optimale est égal à 63,96 %. Le taux de chevauchement au début de la trajectoire, c'est-à-dire au centre de la spirale est toujours supérieur à la valeur maximale admissible. L'indicateur de sur-qualité vaut 36,04 %.

La mise en oeuvre du procédé de détermination de trajectoire peut être appliquée au cas d'une trajectoire en forme de spirale. Le chemin de référence initialement fixé au début du procédé correspond à un tour de spirale dont la taille a été ajustée de telle sorte que le taux de chevauchement est compris entre la fraction maximale $\alpha$max=18% et la fraction minimale $\alpha$min=12%.

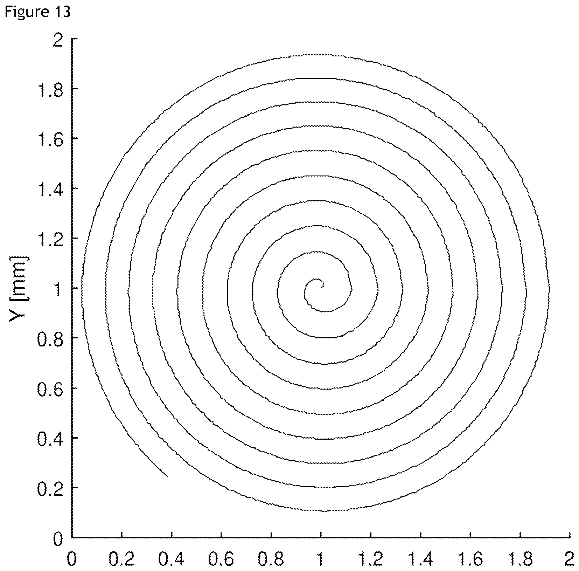

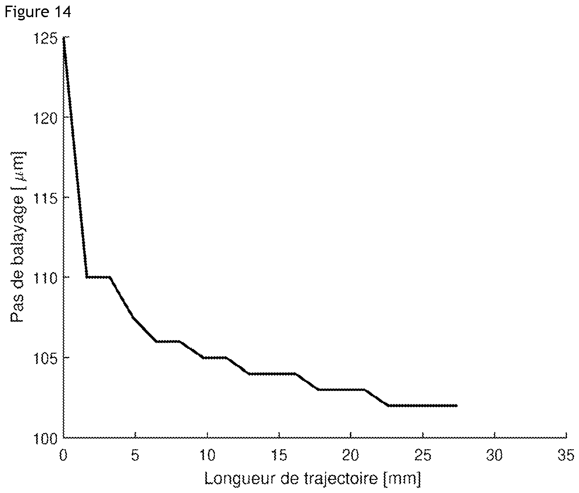

La figure 13 représente la trajectoire adaptative obtenue et la figure 14 représente le pas de balayage en fonction de la position sur la trajectoire adaptative.

Le pas au début de la trajectoire, c'est-à-dire au centre de la spirale est égal à 125 $\mu$m et la valeur minimale du pas est égale à 103 $\mu$m.

Dans le champ de température maximale associé à cette trajectoire adaptative, le maximum relevé vaut 3100 K et le minimum vaut 1800 K.

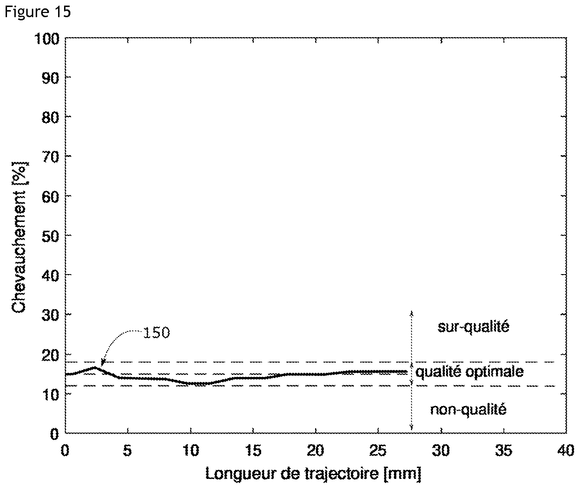

La figure 15 représente le taux de chevauchement en fonction de la position sur la trajectoire adaptative 150. L'ensemble de la courbe 150 est comprise dans la zone de qualité optimale, correspondant à un taux de qualité optimale de 100 %.

La trajectoire adaptative permet également de réduire la longueur de la trajectoire. La table 2 liste les longueurs de trajectoire dans les deux cas de recette à pas fixe et dans le cas de la trajectoire adaptative.

| Type de trajectoire | pas fixe = 70 $\mu$m (Recette initiale) | pas fixe = 95 $\mu$m (Recette modifiée) | Trajectoire adaptative |
|---|---|---|---|
| Longueur de la trajectoire (mm) | 44 | 30,47 | 27,33 |

La trajectoire adaptative permet une diminution d'environ 38 % par rapport à la trajectoire calculée avec la recette initiale.

*Application au cas d'une pièce en forme d'étoile à quatre branches*

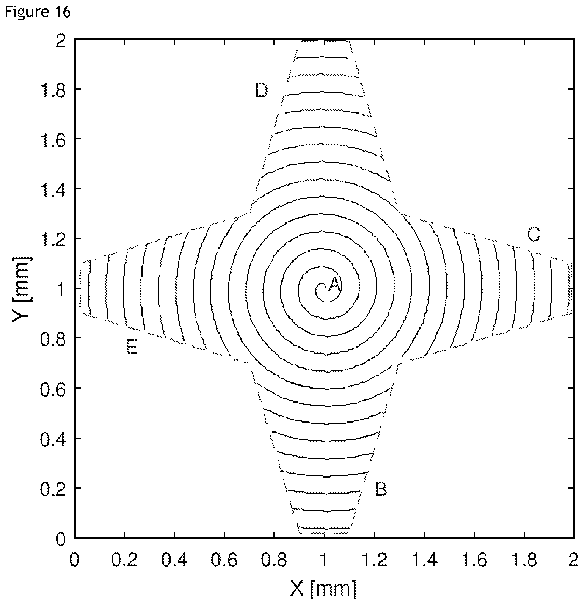

La figure 16 représente de manière schématique une trajectoire de balayage laser que l'on peut choisir pour fabriquer une pièce présentant une forme d'étoile à quatre branches. La figure 16 correspond à un pas de balayage égal à 70 $\mu$m.

La trajectoire est balayée par le laser à partir du centre de la spirale dans la zone A. Ensuite le laser balaye les branches dans l'ordre suivant des zones : B, C, D et E. La partie de la trajectoire au sein de chacune des zones B, C, D et E est composé de chemins adjacents en forme d'arcs de cercle balayés depuis l'intérieur de la pièce vers l'extérieur de la pièce.

Il est possible d'établir pour cette trajectoire le champ de température de la poudre maximale atteinte dans la surface et de mesurer un maximum dans ce champ égal à 3500 K et un minimum égal à 2500 K.

La température maximale atteinte est plus importante au centre de la zone A que sur l'extérieur de la zone A. Au sein des branches de l'étoile, c'est-à-dire au sein des zones B, C, D et E, la température maximale atteinte est plus importante qu'au centre de la zone A. Comme la longueur des chemins adjacents en forme d'arc de cercle diminue graduellement dans une branche, il y a augmentation de la température maximale atteinte et apparition de zones de surchauffe au niveau de l'extrémité extérieure de chaque branche.

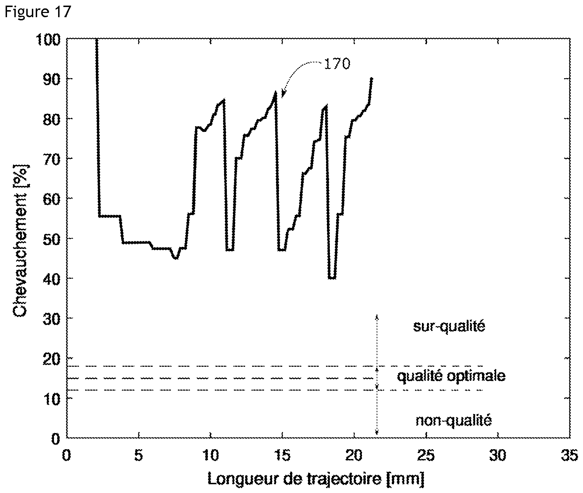

L'augmentation de la température maximale s'accompagne d'un taux de chevauchement qui augmente. La figure 17 représente schématiquement l'évolution du taux de chevauchement le long de la trajectoire.

Le taux de chevauchement atteint 100 % au niveau du centre de l'étoile c'est-à-dire au début de la trajectoire (longueur de trajectoire égale à zéro sur la figure 17), puis il diminue jusqu'à 40 %. Il y a ensuite dans la courbe quatre motifs de variations. Chaque motif de variations présente une augmentation vers 80% suivie d'une chute brusque du taux en dessous de 50%. Chaque motif de variations correspond au balayage d'une branche. Au cours du balayage d'une branche, le taux de chevauchement augmente jusqu'à atteindre les valeurs les plus importantes vers la fin du balayage. Le tout début du balayage de la branche suivante correspond à une brusque chute du taux de chevauchement.

L'indicateur de sur-qualité Isq est égal à 100 %.

Augmenter le pas de balayage à 95 $\mu$m permet de réduire à la fois les températures maximales atteintes et les taux de chevauchement.

Le champ de température de la poudre maximale atteinte montre, pour une trajectoire en forme d'étoile avec un pas égal à 95 $\mu$m, un maximum égal à 3200 K et un minimum égal à 2000 K.

L'indicateur de qualité optimale $I_{op}$ est égal à 12,25 %. Cependant le taux de chevauchement reste supérieur à la fraction maximale sur la majeure partie de la trajectoire, l'indicateur de sur-qualité $I_{sq}$ est égal à 87,75 %.

La mise en oeuvre du procédé de détermination de trajectoire peut être appliquée au cas d'une trajectoire en forme d'étoile à quatre branches. Le chemin de référence initialement fixé au début du procédé correspond à un tour de spirale dont la taille a été ajustée de telle sorte que le taux de chevauchement est compris entre la fraction maximale $\alpha$max=18% et la fraction minimale $\alpha$min=12%.

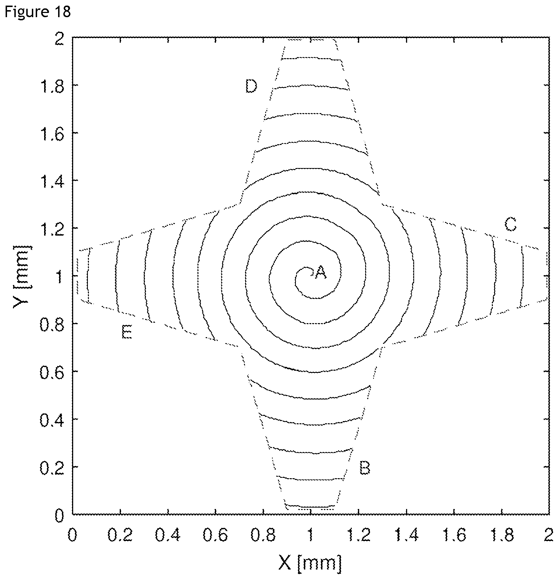

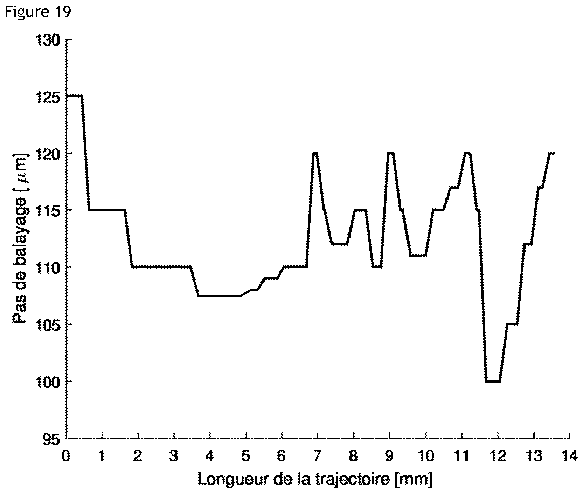

La figure 18 représente la trajectoire adaptative obtenue et la figure 19 représente le pas de balayage en fonction de la position sur la trajectoire adaptative.

La valeur du pas est maximale à 125 $\mu$m en tout début de la trajectoire, c'est-à-dire au centre de la spirale A visible sur la figure 18.

Le pas diminue ensuite au fur et à mesure que le laser balaye cette zone A.

Ensuite, il y a dans la courbe du pas quatre motifs de variations. Chaque motif de variations présente une augmentation vers 120$\mu$m suivie d'une diminution en dessous de 115 $\mu$m. Chaque motif de variations correspond au balayage d'une branche.

La valeur minimale du pas est enregistrée à 100 $\mu$m (longueur de la courbe entre 11 et 12 mm). Cette valeur correspond au premier chemin adjacent de la dernière branche E. Compte tenu du temps écoulé nécessaire pour le balayage des trois branches précédentes B, C et D, l'énergie apportée par le laser s'est dissipée. De ce fait, la température avant consolidation de la poudre le long du premier chemin de la branche E est sensiblement plus faible que pour le premier chemin de la branche B. Pour assurer la jonction entre la zone fondue dans la partie de la zone A proche de la branche E et la zone entourant le premier chemin de la branche E, il est nécessaire de réduire le pas de balayage.

Dans le champ de température maximale associé, le maximum relevé vaut 3150 K et le minimum vaut 1800 K.

Le taux de chevauchement en fonction de la position sur la trajectoire adaptative est toujours compris dans la zone de qualité optimale, correspondant à un taux de qualité optimale de 100 %.

La trajectoire adaptative permet à nouveau de réduire la longueur de la trajectoire. La table 3 liste les longueurs de trajectoire dans les deux cas de recette à pas fixe et dans le cas de la trajectoire adaptative.

| Type de trajectoire | pas fixe = 70 $\mu$m (Recette initiale) | pas fixe = 95 $\mu$m (Recette modifiée) | Trajectoire adaptative |
|---|---|---|---|
| Longueur de la trajectoire (mm) | 21,33 | 16,1 | 13,57 |

La trajectoire adaptative permet une diminution d'environ 36 % par rapport à la trajectoire calculée avec la recette initiale.

*Exemple d'estimation du chevauchement*

Pour estimer un chevauchement possible entre la zone de fusion simulée de référence et la zone de fusion adjacente simulée, on détermine la demi-somme d'une largeur transversale de la zone de fusion simulée de référence et d'une largeur transversale possible de la zone de fusion adjacente simulée soustraite de la distance séparant la position possible du point adjacent ($T_{i+1j}$) et la position du point de référence ($T_{ij}$).

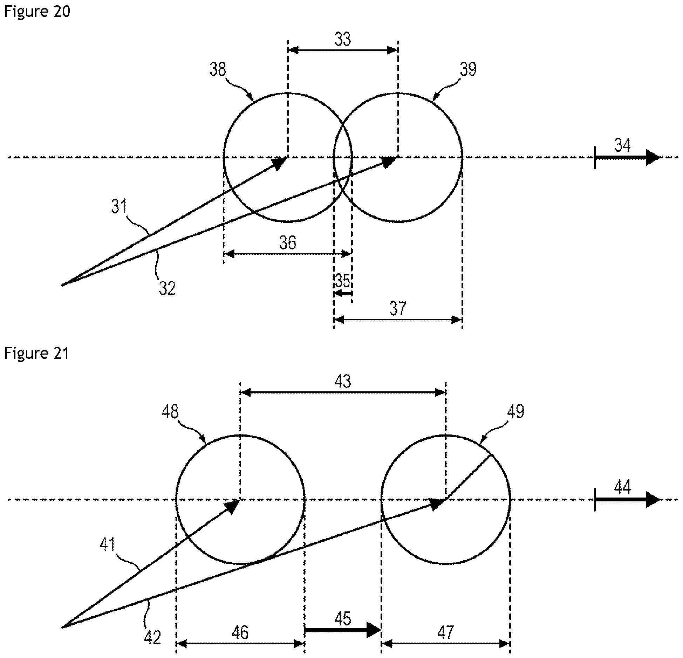

Les figures 20 et 21 illustrent cette estimation grâce à des représentations schématiques de zones de fusion simulées dans deux configurations de chevauchement distinctes entre la zone de fusion simulée de référence 38, 48 qui entoure le point de référence de vecteur position numéroté 31, 41 et la zone de fusion simulée adjacente 39, 49 qui entoure la position possible du point adjacent de vecteur position numéroté 32,42.

La zone de fusion 38 de la figure 20 entoure un point de référence $T_{ij}$ de vecteur position numéroté 31. La largeur transversale totale 36 de la zone de fusion 38 correspond au terme $L_{ij}$.

Plus loin, dans la direction du vecteur numéroté 34 sur la figure 20, se trouve la zone de fusion 39 qui entoure la position possible du point adjacent $T_{i+1j}$ de vecteur position numéroté 32. La largeur totale possible 37 de la zone de fusion 39 correspond à la largeur possible $L_{i+1j}$. La distance séparant la position possible du point adjacent ($T_{i+1j}$) et la position du point de référence ($T_{ij}$) est référencée 33 sur la figure 20 et peut s'exprimer comme $d_{ij}$.

La figure 20 correspond à la situation où les surfaces 38 et 39 se croisent et possèdent une surface commune. Dans cette situation, il peut être estimé un chevauchement, noté 35 sur la figure 20 dont la valeur est estimée à

$$\frac{L_{ij}}{2} + \frac{L_{i+1j}}{2} - d_{ij}$$

La zone de fusion 48 de la figure 21 entoure un point de référence $T_{ij}$ de vecteur position numéroté 41. La largeur totale 46 de la zone de fusion 48 correspond au terme $L_{ij}$.

Plus loin, dans la direction du vecteur numéroté 44 sur la figure 21, se trouve la zone de fusion 49 qui entoure la position possible du point adjacent $T_{i+1j}$ de vecteur position numéroté 42. La largeur possible 47 de la zone de fusion 49 correspond à la largeur possible $L_{i+1j}$. La distance séparant la position possible du point adjacent ($T_{i+1j}$) et la position du point de référence ($T_{ij}$) est référencée 43 sur la figure 21 et peut s'exprimer comme $d_{ij}$

La figure 21 correspond à la situation où les surfaces 38 et 39 ne se croisent pas et ne possèdent pas de surface commune. Dans cette situation, il n'est pas possible d'estimer un chevauchement, mais on peut définir un espacement, noté 45 sur la figure 21,

$$d_{ij} - \left(\frac{L_{ij}}{2} + \frac{L_{i+1j}}{2}\right)$$

Durant le procédé de détermination de trajectoire tel que présenté plus haut, lors de la reprise de la boucle d'étapes secondaires, on modifie la position possible du point adjacent ($T_{i+1j}$) de sorte que la distance séparant la position possible du point adjacent ($T_{i+1j}$) et la position du point de référence ($T_{ij}$) est remplacée par la différence entre ladite distance et l'écart entre le chevauchement possible estimé et le produit de la largeur transversale de la zone de fusion simulée de référence et du taux de chevauchement cible Dans ce cas, la nouvelle position possible $T_{i+1j}(k+1)$ du point adjacent avant de réitérer les étapes secondaires prend en compte la valeur obtenue du chevauchement estimé : si le chevauchement est trop important, la nouvelle position possible du point adjacent est plus éloignée du point de référence, si le chevauchement est trop faible, la nouvelle position possible du point adjacent est plus rapprochée du point de référence.

Plus précisément, on utilise l'écart $(L_{ij}\alpha_{ij}(k) - L_{ij}\alpha c)$ entre le chevauchement estimé et le produit de la largeur transversale de la zone de fusion simulée de référence et du taux de chevauchement cible.

La distance $d_{i+1j}(k)$ séparant la position possible $T_{i+1j}(k)$ du point adjacent et la position du point de référence $T_{ij}$ est remplacée par une nouvelle distance $d_{i+1j}(k+1)$ séparant la nouvelle position possible $T_{i+1j}(k+1)$ du point adjacent et la position du point de référence $T_{ij}$. Le lien entre ces distances est donné par :

$$d_{i+1j}(k+1) = d_{i+1j}(k) - (L_{ij}\alpha_{ij}(k) - L_{ij}\alpha c).$$

Cela permet de disposer d'une nouvelle position possible $T_{i+1j}(k+1)$ du point adjacent.

*Estimation d'une largeur transversale d'une zone de fusion simulée entourant un point de la trajectoire balayée par le laser*

Certains des procédés de détermination de trajectoire suivie par un faisceau laser de fabrication additive sélective tels qu'on les a décrits précédemment peuvent nécessiter l'estimation d'une largeur transversale d'une zone de fusion simulée qui entoure un point particulier d'un chemin particulier par exemple un point de référence du chemin de référence ou un point situé à une position possible d'un point adjacent. Ce point particulier peut être nommé point d'étude et une estimation d'une largeur transversale d'une zone de fusion simulée qui entoure un point d'étude peut être réalisée en mettant en oeuvre les étapes décrites ci-après.

Dans une première étape, plusieurs points de calcul sont déterminés parmi les points de la couche de poudre situés dans un voisinage du point d'étude. L'étendue du voisinage du point d'étude et le nombre de points de calcul au sein de ce voisinage déterminent d'une part la qualité de l'estimation obtenue et d'autre part le temps de calcul nécessaire à l'obtention de l'estimation.

La qualité de l'estimation et le temps de calcul augmentent chacun lorsque l'étendue du voisinage augmente ou lorsque le nombre de points de calcul augmente.

Dans une seconde étape, une température maximale atteinte par la poudre est estimée en chacun des points de calcul. Cette estimation peut prendre en compte des variations de température de la couche de poudre aux points d'étude dues à l'émission d'un faisceau laser de sorte à consolider des zones de la couche de poudre entourant des points amont de la partie de la trajectoire située en amont d'un passage du faisceau laser au point d'étude. Le point d'étude étant soit un point de référence, soit le point adjacent en cours de détermination, la partie de la trajectoire située en amont du point d'étude est connue depuis le début du procédé ou a été déjà déterminée par le procédé. L'estimation peut également prendre en compte la variation de température de la couche de poudre aux points d'étude due à l'émission d'un faisceau laser de sorte à consolider une zone de la couche de poudre entourant le point d'étude.

De la même manière, l'estimation peut prendre en compte la variation de température de la couche de poudre aux points d'étude due à la consolidation d'une précédente couche de poudre, ou due à un préchauffage de la couche poudre avec des moyens de chauffage.

Dans une troisième étape, la température maximale ainsi estimée est comparée avec la température de fusion de la poudre.

Dans une quatrième étape, les points de calcul dont la température maximale estimée est supérieure ou égale à la température de fusion de la poudre, sont identifiés. On peut les désigner par l'expression de « points fondus ». L'ensemble de ces points fondus se trouve regroupé autour du point d'étude. Tous les points de calcul dont la température maximale estimée est inférieure strictement à la température de fusion de la poudre se situent à une distance plus importante du point d'étude, en dehors d'une zone occupée par les points fondus.

Connaissant la répartition des points fondus, il est possible d'estimer la largeur transversale de la zone à l'intérieur de laquelle se situent les points fondus. Cette zone correspond à la zone de fusion simulée. L'estimation de la zone est d'autant plus précise que le voisinage choisi est large et que nombre de points de calcul est important.

Enfin dans une cinquième étape, une largeur transversale de la zone de fusion entourant le point d'étude est estimée dans la direction qui va du chemin de référence vers le chemin adjacent.

*Estimation de la température maximale atteinte en un point de calcul*

Certains des procédés de détermination de trajectoire suivie par un faisceau laser de fabrication additive sélective tels qu'on les a décrits précédemment peuvent nécessiter l'estimation d'une température maximale atteinte par la poudre en un point de calcul de la couche de poudre au cours du procédé de balayage de la poudre par un faisceau laser.

Cette estimation peut être réalisée en prenant en compte la diffusion au point de calcul de l'énergie apportée par le laser à la couche de poudre de façon à consolider des zones de la couche de poudre situées en amont de la trajectoire de balayage laser, à partir de la mise en oeuvre des étapes décrites ci-après.

Dans une première étape un calcul est mené pour chaque point amont pour estimer une variation de température de la poudre au point de calcul dues à l'émission d'un faisceau laser de sorte à consolider une zone de la couche de poudre entourant le point amont. Le calcul permet également d'estimer une variation de température de la poudre au point de calcul due à l'émission d'un faisceau laser de sorte à consolider une zone de la couche de poudre entourant le point d'étude.

La variation de température de la poudre au point de calcul due à l'émission d'un faisceau laser de sorte à consolider une zone de la couche de poudre entourant un point amont ou le point d'étude est une série de valeurs datées. La variation de température est estimée à différents instants qui sont situés dans un intervalle temporel d'estimation qui comprend l'instant de passage du faisceau laser au point d'étude. L'intervalle temporel d'estimation est la durée totale de la recette estimée, depuis le préchauffage éventuel de la poudre, la première consolidation d'une zone de la couche de poudre, jusqu'à la dernière consolidation d'une zone de la couche de poudre.

En supposant que le faisceau laser est émis à l'instant u afin de consolider une zone de la couche de poudre entourant soit un point amont soit le point d'étude, l'énergie reçue par la couche au cours de l'émission du faisceau laser de sorte à consolider ladite zone de la couche de poudre est notée Q.

L'estimation de la variation de température $\Delta T$ de la poudre au point de calcul à un instant t ultérieur à l'instant u peut s'écrire de la manière suivante :

$$\Delta T(r, t-u) = \frac{2Q}{\varepsilon\sqrt{\pi^3\big(t_0+(t-u)\big)}}\frac{1}{R^2+8a(t-u)}exp\left(\frac{-2r^2}{R^2+8a\big(t_0+(t-u)\big)}\right)$$

dans laquelle $\varepsilon$ est une effusivité thermique de la couche de poudre, R est un rayon du faisceau laser, *a* est une diffusivité thermique de la couche de poudre, $t_0$ est un instant prédéterminé et r est la distance entre le point de calcul et le point qui est soit un point amont soit le point d'étude et qui appartient à la zone de la couche de poudre consolidée à l'instant u.

Dans une deuxième étape une estimation d'une température de la poudre au point de calcul est calculée. A nouveau cette estimation est une série de valeurs datées. La température de la poudre au point de calcul est estimée à différents instants qui sont situés dans l'intervalle temporel d'estimation.

Ce calcul prend en compte l'émission d'un faisceau laser de sorte à balayer la partie de la trajectoire située en amont du point d'étude et de sorte à consolider une zone de la couche de poudre entourant le point d'étude. L'estimation de la température T de la poudre au point de calcul à un instant t peut s'écrire de la manière suivante :

$$Tp(t) = T_0 + \sum_{u<t} \Delta T(r, t-u)$$

dans laquelle $T_0$ est la température initiale de la poudre,

$$\sum_{u<t}$$

correspond à la somme sur l'ensemble desdits points amont ou d'étude qui à l'instant t sont entourés d'une zone de la couche de poudre consolidée par le laser. Il est à noter que le terme « r » dans l'expression précédente varie en fonction de l'instant « u ».

Dans une troisième étape, il est extrait de la série de valeurs datées formant l'estimation de la température de la poudre au point de calcul une valeur maximum retenue comme température maximale atteinte au point de calcul.

*Voisinage temporel et voisinage spatial*

La détermination des températures maximales des points de calcul prend d'autant plus de temps que l'estimation est précise c'est-à-dire que le nombre de points amont est important.

Afin de limiter le temps de calcul sans détériorer la qualité de l'estimation, il est possible de définir un voisinage spatial Vl et un voisinage temporel Vt qui limite le nombre de points amont à prendre en compte dans les calculs.

Le voisinage temporel Vt représente la durée des effets thermiques du balayage d'un segment de trajectoire. Au-delà de cette durée, l'effet sur la température de la poudre de l'énergie diffusée dans l'environnement du segment balayé et apportée lors de son balayage peut être considéré comme négligeable.

Le voisinage spatial Vl représente la distance maximale des effets thermiques du balayage d'un segment de trajectoire. Au-delà de cette distance, l'effet sur la température de la poudre de l'énergie diffusée dans l'environnement du segment balayé et apportée lors de son balayage peut être considérée comme négligeable.

Le caractère négligeable nécessite de définir une différence seuil de température Ds. Les effets thermiques du balayage correspondant à des variations de température en deçà de cette différence sont considérés comme négligeables.

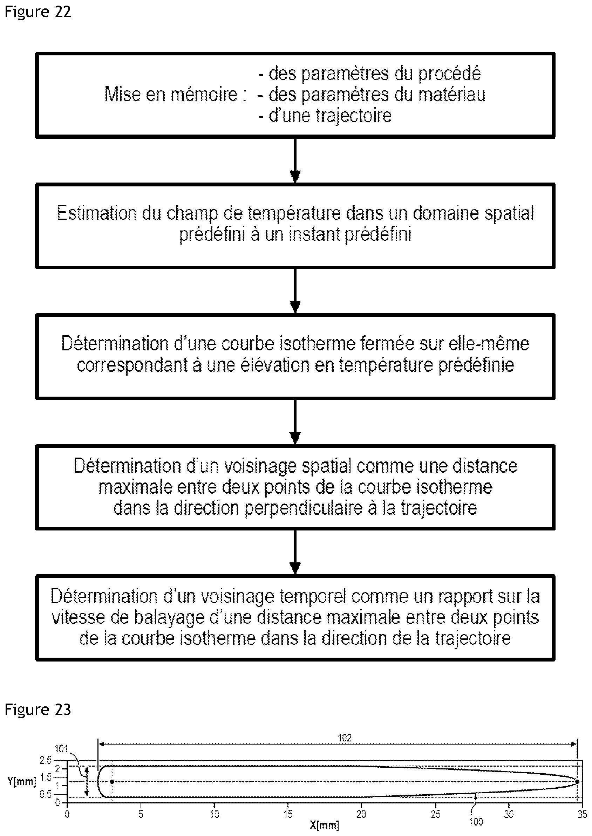

Le voisinage temporel Vt et le voisinage spatial Vl peuvent être déterminés à partir de la méthode suivante, illustrée sur la figure 22 :

Dans une première étape, les informations suivantes sont mises en mémoire dans un calculateur :

- les paramètres du procédé de balayage laser (puissance et rayon du laser, vitesse de balayage du laser),
- les paramètres du matériau (conductivité thermique, capacité thermique, densité, température de fusion et température initiale de la poudre To),
- les coordonnées d'une trajectoire de type portion de droite.

Dans une deuxième étape, le calculateur délivre une estimation de la température de la poudre dans un domaine spatial prédéfini qui comprend la trajectoire définie à l'étape précédente.

L'estimation de la température délivrée par le calculateur correspond à la température de la poudre à un instant prédéfini situé temporellement à la fin du balayage de l'ensemble de la trajectoire par le laser après un temps de thermalisation de la poudre.

Cette estimation peut être calculée à partir des éléments que l'on a déjà définis précédemment comme la somme de variations de température de la couche de poudre dues à l'émission d'un faisceau laser de sorte à consolider une zone de la couche de poudre entourant un point de la trajectoire.

On obtient à l'issue de la deuxième étape une carte des températures de la poudre dans le domaine spatial prédéfini à l'instant prédéfini.

Dans une troisième étape, une courbe isotherme correspondant à la somme $T_0+D_S$ de la température initiale de la poudre $T_0$ et de la différence seuil de température Ds est déterminée au sein de la carte des températures obtenue à la deuxième étape. Cette courbe isotherme correspond à une élévation en température de la différence seuil de température Ds.

Dans une quatrième étape, le voisinage spatial est déterminé comme la distance maximale dans la direction perpendiculaire à la trajectoire de type portion de droite entre deux points de la courbe isotherme déterminée à l'étape précédente.

Dans une cinquième étape, le voisinage temporel est déterminé comme le rapport sur la vitesse de balayage du laser de la distance maximale dans la direction de la trajectoire de type portion de droite entre deux points de la courbe isotherme déterminée à la troisième étape.

La figure 23 représente les distances utiles pour déterminer le voisinage spatial et le voisinage temporel.

L'axe X représenté sur la figure 23 représente la direction de la portion de droite de la trajectoire définie dans la première étape de la méthode précédente. La trajectoire est balayée dans le sens des X croissants. L'axe Y représente la direction perpendiculaire à la trajectoire de type portion de droite.

La courbe fermée 100 représente la courbe isotherme définie lors de la troisième étape de la méthode précédente.

Le voisinage spatial correspond à la longueur du segment 101.

La distance maximale entre deux points de la courbe isotherme déterminée à la troisième étape dans la direction de la trajectoire de type portion de droite correspond à la longueur du segment 102.

Le rapport de la longueur du segment 102 sur la vitesse de balayage permet de définir le voisinage temporel.

Une fois le voisinage spatial Vl et le voisinage temporel Vt déterminés, ces données peuvent être utilisées pour limiter le temps de calcul pour prédéterminer les variations de température permettant de calculer les températures maximales atteintes par la poudre au cours du procédé de fabrication additive sélective.

Plus précisément, le calcul, pour chaque point amont, d'une estimation d'une variation de température de la poudre au point de calcul dues à l'émission d'un faisceau laser de sorte à consolider une zone de la couche de poudre entourant le point amont peut comprendre les étapes suivantes :

- calcul pour chaque point amont d'une distance séparant le point d'étude et ledit point amont,

- comparaison de ladite distance à une distance de voisinage spatial prédéterminée,
- estimation à zéro, pour chaque point amont séparé du point d'étude d'une distance supérieure à la distance de voisinage spatial, d'une variation de température de la poudre au point de calcul due à l'émission d'un faisceau laser de sorte à consolider une zone de la couche de poudre entourant le point amont.

Le calcul, pour chaque point amont, d'une estimation d'une variation de température de la poudre au point de calcul dues à l'émission d'un faisceau laser de sorte à consolider une zone de la couche de poudre entourant le point amont peut aussi comprendre les étapes suivantes :

- calcul pour chaque point amont d'une durée séparant l'émission d'un faisceau laser de sorte à consolider une zone de la couche de poudre entourant le point amont et le passage du faisceau laser au point d'étude,
- comparaison de ladite durée à une durée de voisinage temporel prédéterminée,
- estimation à zéro, pour chaque point amont dont la durée calculée est supérieure à la durée de voisinage temporel, d'une variation de température de la poudre au point de calcul due à l'émission d'un faisceau laser de sorte à consolider une zone de la couche de poudre entourant le point amont.

*Procédé et Appareil de fabrication additive sélective*

Il est proposé un procédé de fabrication additive sélective d'un objet tridimensionnel à partir d'une couche de poudre, dans un appareil de fabrication additive, le procédé comprenant les étapes suivantes :

application d'une couche de poudre de fabrication additive sur un support ou sur une couche préalablement consolidée,
émission d'un faisceau laser sur la couche de poudre suivant une trajectoire constituée d'une pluralité de chemins adjacents, le passage du faisceau laser sur ces chemins provoquant une fusion de la couche de poudre,
la trajectoire étant déterminée en mettant en oeuvre un des procédés de détermination de trajectoire tels qu'on a pu les présenter plus haut, ladite trajectoire étant mémorisée et/ou transmise à une unité de contrôle de l'appareil de fabrication additive sélective.

Le procédé de fabrication pourra notamment être mis en oeuvre grâce à un appareil de fabrication additive sélective 121 d'un objet tridimensionnel 122 à partir d'une couche de poudre, l'appareil comprenant :

un réservoir de poudre 127 situé au-dessus d'un plateau horizontal 123,
un arrangement 124 pour la distribution de ladite poudre métallique sur le plateau adapté pour étaler successivement plusieurs couches de poudre,
une source 1212 de type laser et une unité de contrôle 129 adaptée pour commander la source de type laser de façon à émettre un faisceau laser sur la couche de poudre suivant une trajectoire constituée d'une pluralité de chemins adjacents.

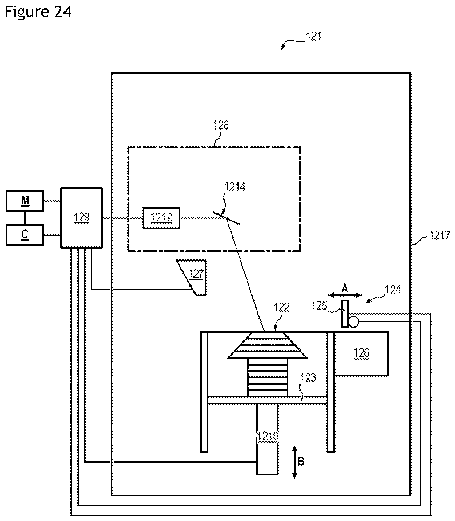

La figure 24 illustre un tel appareil 121 de fabrication additive sélective et montre :

- un support tel qu'un plateau horizontal 123 sur lequel sont déposées successivement les différentes couches de poudre de fabrication additive (poudre métallique, poudre de céramique, etc.) permettant de fabriquer un objet tridimensionnel (objet 122 en forme de sapin sur la figure 24),

- un réservoir de poudre 127 situé au-dessus du plateau 123,

- un arrangement 124 pour la distribution de ladite poudre métallique sur le plateau, cet arrangement 124 comportant par exemple une raclette 125 et/ou un rouleau de mise en couche pour étaler les différentes couches successives de poudre (déplacement selon la double flèche A),

- un ensemble 128 comportant au moins une source 1212 de type laser pour la fusion (totale ou partielle) des couches fines étalées, le faisceau laser généré par la source 1212 rentre en contact avec les couches fines étalées dans le plan de poudres, c'est-à-dire dans le plan où la couche de poudre a été étalée par la raclette 125.

- une unité de contrôle 129 qui assure le pilotage des différents composants de l'appareil 121. L'unité de contrôle 129 est reliée à des moyens de mémoire M dans lesquels une trajectoire prédéterminée peut être mémorisée,

- un mécanisme 1210 pour permettre de descendre le support du plateau 123 au fur et à mesure du dépôt des couches (déplacement selon la double flèche B).

Dans l'exemple décrit en référence à la figure 24, au moins un miroir galvanométrique 1214 permet d'orienter et de déplacer le faisceau laser issu de la source 1212 par rapport à l'objet 122 en fonction des informations envoyées par l'unité de contrôle 129. Tout autre système de déviation peut bien entendu être envisagé.

Les composants de l'appareil 121 sont agencés à l'intérieur d'une enceinte étanche 1217 qui peut être reliée à un circuit de traitement d'air ou de gaz inerte. Le circuit de traitement d'air ou de gaz inerte peut être en outre adapté pour régler la pression au sein de l'enceinte étanche 1217 en dessous ou au-dessus de la pression atmosphérique.

L'appareil 121 de fabrication additive sélective peut également comprendre un calculateur C représenté sur la figure 24 pour déterminer des estimations de variations de température une fois que le procédé de fabrication a débuté ou plus généralement mettre en oeuvre un des procédés de détermination de trajectoire tels qu'on a pu les présenter plus haut.

Le calculateur C est adapté pour traiter différents points de la trajectoire suffisamment rapidement, en particulier le temps durant lequel les différents points sont traités par le calculateur doit être inférieur ou au moins égal au temps mis par le faisceau laser à éclairer ou balayer ces mêmes points à la vitesse de balayage.

Un tel calculateur C peut collaborer avec la mémoire M de façon à mémoriser les estimations de variations de température une fois qu'elles ont été produites.

Enfin, toute étape du procédé de détermination de trajectoire que l'on a décrit plus haut peut être mis en oeuvre par une instruction adaptée d'un programme d'ordinateur.

Un programme d'ordinateur comprenant une ou plusieurs instructions de ce type peut être exécuté sur un ordinateur.

## Revendications

1. Procédé (P) de détermination de trajectoire suivie par un faisceau laser de fabrication additive sélective d'un objet tridimensionnel, le faisceau laser étant destiné à être émis vers une couche de poudre et déplacé selon une trajectoire constituée d'une pluralité de chemins adjacents pour provoquer une fusion de la couche de poudre, **caractérisé en ce que** les chemins sont déterminés en mettant en oeuvre les étapes suivantes :

    a) détermination sur un chemin de référence ($T_i$) prédéterminé de plusieurs points de référence ($T_{ij}$),
    b) détermination de plusieurs points adjacents ($T_{i+1j}$) situés d'un même côté du chemin de référence, chaque point adjacent ($T_{i+1j}$) étant associé à un point de référence ($T_{ij}$), une zone de fusion adjacente simulée entourant ledit point adjacent ($T_{i+1j}$) et une zone de fusion de référence simulée entourant le point de référence ($T_{ij}$), la détermination des points adjacents ($T_{i+1j}$) comprenant successivement pour chaque point adjacent ($T_{i+1j}$) dans un sens de parcours de la trajectoire les étapes suivantes :

    - estimation pour le point de référence ($T_{ij}$) associé au point adjacent ($T_{i+1j}$) d'une largeur transversale ($L_{ij}$) de la zone de fusion simulée de référence,
    - détermination d'une position possible du point adjacent ($T_{i+1j}$), la distance séparant la position possible du point adjacent ($T_{i+1j}$) de la position du point de référence ($T_{ij}$) étant égale au produit de la largeur transversale de la zone de fusion simulée de référence et d'un taux de chevauchement cible ($\alpha c$) prédéterminé, le point adjacent ($T_{i+1j}$) étant placé par rapport au point de référence ($T_{ij}$) dans une direction orthogonale au chemin de référence ($T_i$) au point de référence ($T_{ij}$) comprise dans le plan de la couche de poudre et dirigé du chemin de référence ($T_i$) vers le chemin adjacent ($T_{i+1}$),
    - réalisation de la boucle d'étapes secondaires suivantes :

        -- estimation d'une largeur transversale ($L_{i+1j}$) possible de la zone de fusion adjacente simulée,
        -- estimation d'un chevauchement possible entre la zone de fusion simulée de référence et la zone de fusion adjacente simulée,
        -- reprise de la boucle d'étapes secondaires en modifiant la position possible du point adjacent ($T_{i+1j}$) si le chevauchement possible estimé correspond à une fraction de la zone de fusion de référence simulée inférieure à une fraction minimale prédéterminée ou supérieure à une fraction maximale prédéterminée,

    c) détermination d'un chemin adjacent ($T_{i+1}$) passant par les plusieurs points adjacents déterminés,
    d) itération des étapes a) à c) en utilisant le chemin adjacent déterminé comme nouveau chemin de référence, de façon à déterminer à chaque itération un nouveau chemin adjacent, l'ensemble des chemins adjacents ainsi déterminés définissant la trajectoire destinée à être suivie par le faisceau laser, ladite trajectoire étant mémorisée et/ou transmise à une unité de contrôle d'un appareil de fabrication additive sélective.

2. Procédé (P) de détermination de trajectoire suivie par un faisceau laser de fabrication additive sélective selon la revendication 1, comprenant en outre une détermination d'un écart entre le chevauchement possible estimé et un chevauchement cible égal au produit de la largeur transversale de la zone de fusion simulée de référence et du taux de chevauchement cible ($\alpha c$).

3. Procédé (P) de détermination de trajectoire suivie par un faisceau laser de fabrication additive sélective selon la revendication 2, dans lequel le taux de chevauchement cible ($\alpha c$) vaut 15%, la fraction minimale ($\alpha min$) vaut 12% et la fraction maximale ($\alpha max$) vaut 18%.

4. Procédé (P) de détermination de trajectoire suivie par un faisceau laser de fabrication additive sélective selon l'un des revendications 2 à 3, dans lequel pour estimer un chevauchement possible entre la zone de fusion simulée de référence et la zone de fusion adjacente simulée, on détermine la demi-somme d'une largeur transversale de la zone de fusion simulée de référence et d'une largeur transversale possible de la zone de fusion adjacente simulée soustraite de la distance séparant la position possible du point adjacent ($T_{i+1j}$) et la position du point de référence ($T_{ij}$).

5. Procédé (P) de détermination de trajectoire suivie par un faisceau laser de fabrication additive sélective selon l'une des revendications 2 à 4, dans lequel lors de la reprise de la boucle d'étapes secondaires, la position possible du point adjacent ($T_{i+1j}$) est modifiée de sorte que la distance séparant la position possible du point adjacent ($T_{i+1j}$) et la position du point de référence ($T_{ij}$) est remplacée par la différence entre ladite distance et l'écart entre le chevauchement possible estimé et le chevauchement cible.

6. Procédé (P) de détermination de trajectoire suivie par un faisceau laser de fabrication additive sélective selon l'une des revendications 1 à 5, dans lequel l'estimation d'une largeur transversale d'une zone de fusion simulée qui entoure un point d'étude situé sur la couche de poudre, comprend les étapes suivantes :

   - détermination de plusieurs points de calcul, les points de calcul étant des points de la couche de poudre situés dans un voisinage du point d'étude,
   - estimation d'une température maximale atteinte en chacun des points de calcul, l'estimation dépendant de variations de température dues à l'émission d'un faisceau laser de sorte à consolider des zones de la couche de poudre entourant des points amont situés sur la pluralité de chemins en amont d'un passage du faisceau laser au point d'étude, l'estimation dépendant d'une variation de température de la poudre au point de calcul due à l'émission d'un faisceau laser de sorte à consolider une zone de la couche de poudre entourant le point d'étude,
   - comparaison de la température maximale atteinte ainsi estimée avec la température de fusion de la poudre,
   - identification parmi les points de calcul de points fondus pour lesquels l'estimation de la température maximale atteinte est supérieure ou égale à la température de fusion de la poudre,
   - estimation d'une largeur transversale d'une zone occupée par lesdits points fondus.

7. Procédé (P) de détermination de trajectoire suivie par un faisceau laser de fabrication additive sélective selon la revendication 6, dans lequel l'estimation d'une température maximale en un point de calcul comprend les étapes suivantes :

   - calcul pour chaque point amont, d'une estimation d'une variation de température de la poudre au point de calcul due à l'émission d'un faisceau laser de sorte à consolider une zone de la couche de poudre entourant le point amont,
   - calcul d'une estimation de variations de température de la poudre au point de calcul due à l'émission d'un faisceau laser de sorte à consolider des zones de la couche de poudre entourant des points amont,
   - calcul d'une estimation d'une variation de température de la poudre au point de calcul due à l'émission d'un faisceau laser de sorte à consolider une zone de la couche de poudre entourant le point d'étude,
   - calcul d'une estimation d'une température de la poudre au point de calcul dépendant des estimations des variations de température dues à l'émission d'un faisceau laser de sorte à consolider des zones de la couche de poudre entourant le point d'étude ou des points amont,
   - calcul d'une estimation d'une température maximale au point de calcul.

8. Procédé (P) de détermination de trajectoire suivie par un faisceau laser de fabrication additive sélective selon la revendication 6 ou 7, dans lequel l'estimation, pour chaque point amont, d'une estimation d'une variation de température de la poudre au point de calcul due à l'émission d'un faisceau laser de sorte à consolider une zone de la couche de poudre entourant le point amont comprend les étapes suivantes :

  - calcul pour chaque point amont d'une distance séparant le point d'étude et ledit point amont,
  - comparaison de ladite distance à une distance de voisinage spatial prédéterminée,
  - estimation à zéro, pour chaque point amont séparé du point d'étude d'une distance supérieure à la distance de voisinage spatial, d'une variation de température de la poudre au point de calcul due à l'émission d'un faisceau laser de sorte à consolider une zone de la couche de poudre entourant le point amont.

9. Procédé (P) de détermination de trajectoire suivie par un faisceau laser de fabrication additive sélective selon l'une des revendications 6 à 8, dans lequel l'estimation, pour chaque point amont, d'une estimation d'une variation de température de la poudre au point de calcul due à l'émission d'un faisceau laser de sorte à consolider une zone de la couche de poudre entourant le point amont comprend les étapes suivantes :

  - calcul pour chaque point amont d'une durée séparant l'émission d'un faisceau laser de sorte à consolider une zone de la couche de poudre entourant le point amont et le passage du faisceau laser au point d'étude,
  - comparaison de ladite durée à une durée de voisinage temporel prédéterminée,
  - estimation à zéro, pour chaque point amont dont la durée calculée est supérieure à la durée de voisinage temporel, d'une variation de température de la poudre au point de calcul due à l'émission d'un faisceau laser de sorte à consolider une zone de la couche de poudre entourant le point amont.

10. Procédé de fabrication additive sélective d'un objet tridimensionnel à partir d'une couche de poudre, le procédé comprenant, dans un appareil de fabrication additive sélective, les étapes suivantes :

  - application d'une couche de poudre de fabrication additive sur un support ou sur une couche préalablement consolidée,
  - émission d'un faisceau laser sur la couche de poudre suivant une trajectoire constituée d'une pluralité de chemins adjacents, le passage du faisceau laser sur ces chemins provoquant une fusion de la couche de poudre,

le procédé étant **caractérisé en ce que** la trajectoire est déterminée en mettant en oeuvre un procédé selon l'une des revendications 1 à 9, ladite trajectoire étant mémorisée et/ou transmise à une unité de contrôle de l'appareil de fabrication additive sélective.

11. Appareil de fabrication additive sélective (121) d'un objet tridimensionnel (122) à partir d'une couche de poudre, l'appareil comprenant :

  un réservoir de poudre (127) situé au-dessus d'un plateau horizontal (123),
  un arrangement (124) pour la distribution de ladite poudre métallique sur le plateau adapté pour étaler successivement plusieurs couches de poudre,
  une source (1212) de type laser et une unité de contrôle (129) adaptée pour commander la source de type laser de façon à émettre un faisceau laser sur la couche de poudre suivant une trajectoire constituée d'une pluralité de chemins adjacents, le passage du faisceau laser sur ces chemins provoquant une fusion de la couche de poudre, des moyens de mémoire (M) dialoguant avec l'unité de contrôle et dans lesquels est mémorisée une trajectoire déterminée en mettant en oeuvre un procédé selon l'une des revendications 1 à 9.

12. Appareil de fabrication additive sélective selon la revendication 11 comprenant en outre un calculateur (C) adapté pour mettre en oeuvre un procédé de détermination de trajectoire selon l'une des revendications 1 à 9.

13. Programme d'ordinateur comprenant des instructions adaptées à la mise en oeuvre d'au moins une des étapes du procédé selon l'une quelconque des revendications 1 à 9 lorsque ledit programme est exécuté sur un ordinateur.

**Patentansprüche**

1. Verfahren (P) zur Bestimmung einer von einem Laserstrahl zur selektiven additiven Fertigung eines dreidimensionalen Objekts verfolgten Trajektorie, wobei der Laserstrahl dazu bestimmt ist, zu einer Pulverschicht emittiert und gemäß einer Trajektorie verschoben zu werden, die aus einer Vielzahl benachbarter Pfade besteht, um ein Schmelzen der Pulverschicht zu bewirken, **dadurch gekennzeichnet, dass** die Pfade bestimmt werden, indem die folgenden Schritte durchgeführt werden:

a) Bestimmung mehrerer Bezugspunkte ($T_{ij}$) auf einem vorbestimmten Bezugspfad ($T_i$),
b) Bestimmung mehrerer benachbarter Punkte ($T_{i+1j}$), die sich auf einer gleichen Seite des Bezugspfads befinden, wobei jeder benachbarte Punkt ($T_{i+1j}$) einem Bezugspunkt ($T_{ij}$) zugeordnet ist, wobei eine simulierte benachbarte Schmelzzone den benachbarten Punkt ($T_{i+1j}$) umgibt und eine simulierte Bezugsschmelzzone den Bezugspunkt ($T_{ij}$) umgibt, wobei die Bestimmung der benachbarten Punkte ($T_{i+1j}$) nacheinander für jeden benachbarten Punkt ($T_{i+1j}$) in einer Verlaufsrichtung der Trajektorie die folgenden Schritte enthält:

- Schätzung einer Querbreite ($L_{ij}$) der simulierten Bezugsschmelzzone für den dem benachbarten Punkt ($T_{i+1j}$) zugeordneten Bezugspunkt ($T_{ij}$),
- Bestimmung einer möglichen Position des benachbarten Punkts ($T_{i+1j}$), wobei der die mögliche Position des benachbarten Punkts ($T_{i+1j}$) von der Position des Bezugspunkts ($T_{ij}$) trennende Abstand gleich dem Produkt der Querbreite der simulierten Bezugsschmelzzone und einer vorbestimmten Zielüberlappungsrate ($\alpha c$) ist, wobei der benachbarte Punkt ($T_{i+1j}$) bezüglich des Bezugspunkts ($T_{ij}$) in einer Richtung orthogonal zum Bezugspfad ($T_i$) am Bezugspunkt ($T_{ij}$) platziert ist, die in der Ebene der Pulverschicht liegt und vom Bezugspfad ($T_i$) zum benachbarten Pfad ($T_{i+1}$) gerichtet ist,
- Herstellung der Schleife folgender Sekundärschritte :

-- Schätzung einer möglichen Querbreite ($L_{i+1j}$) der simulierten benachbarten Schmelzzone,
-- Schätzung einer möglichen Überlappung zwischen der simulierten Bezugsschmelzzone und der simulierten benachbarten Schmelzzone,
-- Wiederaufnahme der Schleife von Sekundärschritten, indem die mögliche Position des benachbarten Punkts ($T_{i+1}$) verändert wird, wenn die geschätzte mögliche Überlappung einem Bruchteil der simulierten Bezugsschmelzzone kleiner als ein vorbestimmter minimaler Bruchteil oder größer als ein vorbestimmter maximaler Bruchteil entspricht,

c) Bestimmung eines benachbarten Pfads ($T_{i+1}$), der durch die mehreren bestimmten benachbarten Punkte verläuft,
d) Iteration der Schritte a) bis c) unter Verwendung des bestimmten benachbarten Pfads als neuer Bezugpfad, um bei jeder Iteration einen neuen benachbarten Pfad zu bestimmen, wobei die Gesamtheit der so bestimmten benachbarten Pfade die Trajektorie definiert, die dazu bestimmt ist, vom Laserstrahl verfolgt zu werden, wobei die Trajektorie gespeichert und/oder an eine Kontrolleinheit eines Geräts zur selektiven additiven Fertigung übertragen wird.

2. Verfahren (P) zur Bestimmung einer von einem Laserstrahl zur selektiven additiven Fertigung verfolgten Trajektorie nach Anspruch 1, das außerdem eine Bestimmung einer Abweichung zwischen der geschätzten möglichen Überlappung und einer Zielüberlappung gleich dem Produkt der Querbreite der simulierten Bezugsschmelzzone und der Zielüberlappungsrate ($\alpha c$) enthält.

3. Verfahren (P) zur Bestimmung einer von einem Laserstrahl zur selektiven additiven Fertigung verfolgten Trajektorie nach Anspruch 2, wobei die Zielüberlappungsrate ($\alpha c$) 15% beträgt, der minimale Bruchteil ($\alpha min$) 12% beträgt und der maximale Bruchteil ($\alpha max$) 18% beträgt.

4. Verfahren (P) zur Bestimmung einer von einem Laserstrahl zur selektiven additiven Fertigung verfolgten Trajektorie nach einem der Ansprüche 2 bis 3, wobei zur Schätzung einer möglichen Überlappung zwischen der simulierten Bezugsschmelzzone und der simulierten benachbarten Schmelzzone die Halbsumme einer Querbreite der simulierten Bezugsschmelzzone und einer möglichen Querbreite der simulierten benachbarten Schmelzzone subtrahiert von dem die mögliche Position des benachbarten Punkts ($T_{i+1j}$) und die Position des Bezugspunkts ($T_{ij}$) trennenden Abstand bestimmt wird.

5. Verfahren (P) zur Bestimmung einer von einem Laserstrahl zur selektiven additiven Fertigung verfolgten Trajektorie nach einem der Ansprüche 2 bis 4, wobei bei der Wiederaufnahme der Schleife von Sekundärschritten die mögliche Position des benachbarten Punkts ($T_{i+1j}$) geändert wird, so dass der die mögliche Position des benachbarten Punkts ($T_{i+1j}$) und die Position des Bezugspunkts ($T_{ij}$) trennende Abstand durch die Differenz zwischen dem Abstand und der Abweichung zwischen der geschätzten möglichen Überlappung und der Zielüberlappung ersetzt wird.

6. Verfahren (P) zur Bestimmung einer von einem Laserstrahl zur selektiven additiven Fertigung verfolgten Trajektorie nach einem der Ansprüche 1 bis 5, wobei die Schätzung einer Querbreite einer simulierten Schmelzzone, die einen auf der Pulverschicht befindlichen Untersuchungspunkt umgibt, die folgenden Schritte enthält:

- Bestimmung mehrerer Berechnungspunkte, wobei die Berechnungspunkte Punkte der Pulverschicht sind, die sich in einer Nachbarschaft des Untersuchungspunkts befinden,
- Schätzung einer an jedem der Berechnungspunkte erreichten maximalen Temperatur, wobei die Schätzung von Temperaturschwankungen aufgrund der Emission eines Laserstrahls zur Verfestigung von Zonen der Pulverschicht abhängt, die vorgelagerte Punkte umgeben, die sich auf der Vielzahl von Pfaden stromaufwärts vor einem Durchgang des Laserstrahls am Untersuchungspunkt befinden, wobei die Schätzung von einer Temperaturschwankung des Pulvers am Berechnungspunkt aufgrund der Emission eines Laserstrahls zur Verfestigung einer den Untersuchungspunkt umgebenden Zone der Pulverschicht abhängt,
- Vergleich der so geschätzten erreichten maximalen Temperatur mit der Schmelztemperatur des Pulvers,
- Erkennung unter den Berechnungspunkten von geschmolzenen Punkten, für die die Schätzung der erreichten maximalen Temperatur höher als die oder gleich der Schmelztemperatur des Pulvers ist,
- Schätzung einer Querbreite einer von den geschmolzenen Punkten eingenommenen Zone.

7. Verfahren (P) zur Bestimmung einer von einem Laserstrahl zur selektiven additiven Fertigung verfolgten Trajektorie nach Anspruch 6, wobei die Schätzung einer maximalen Temperatur an einem Berechnungspunkt die folgenden Schritte enthält:

- Berechnung für jeden vorgelagerten Punkt einer Schätzung einer Temperaturschwankung des Pulvers am Berechnungspunkt aufgrund der Emission eines Laserstrahls zur Verfestigung einer den vorgelagerten Punkt umgebenden Zone der Pulverschicht,
- Berechnung einer Schätzung von Temperaturschwankungen des Pulvers am Berechnungspunkt aufgrund der Emission eines Laserstrahls zur Verfestigung von vorgelagerte Punkte umgebenden Zonen der Pulverschicht,
- Berechnung einer Schätzung einer Temperaturschwankung des Pulvers am Berechnungspunkt aufgrund der Emission eines Laserstrahls zur Verfestigung einer den Untersuchungspunkt umgebenden Zone der Pulverschicht,
- Berechnung einer Schätzung einer Temperatur des Pulvers am Berechnungspunkt, die von den Schätzungen der Temperaturschwankungen aufgrund der Emission eines Laserstrahls zur Verfestigung von den Untersuchungspunkt oder vorgelagerte Punkte umgebenden Zonen der Pulverschicht abhängt,
- Berechnung einer Schätzung einer maximalen Temperatur am Berechnungspunkt.

8. Verfahren (P) zur Bestimmung einer von einem Laserstrahl zur selektiven additiven Fertigung verfolgten Trajektorie nach Anspruch 6 oder 7, wobei die Schätzung, für jeden vorgelagerten Punkt, einer Schätzung einer Temperaturschwankung des Pulvers am Berechnungspunkt aufgrund der Emission eines Laserstrahls zur Verfestigung einer den vorgelagerten Punkt umgebenden Zone der Pulverschicht die folgenden Schritte enthält:

- Berechnung für jeden vorgelagerten Punkt eines den Untersuchungspunkt und den vorgelagerten Punkt trennenden Abstands,
- Vergleich des Abstands mit einem vorbestimmten Abstand räumlicher Nachbarschaft,
- Nullschätzung, für jeden vorgelagerten Punkt, der vom Untersuchungspunkt um einen Abstand größer als der Abstand räumlicher Nachbarschaft getrennt ist, einer Temperaturschwankung des Pulvers am Berechnungspunkt aufgrund der Emission eines Laserstrahls zur Verfestigung einer den vorgelagerten Punkt umgebenden Zone der Pulverschicht.

9. Verfahren (P) zur Bestimmung einer von einem Laserstrahl zur selektiven additiven Fertigung verfolgten Trajektorie nach einem der Ansprüche 6 bis 8, wobei die Schätzung, für jeden vorgelagerten Punkt, einer Schätzung einer Temperaturschwankung des Pulvers am Berechnungspunkt aufgrund der Emission eines Laserstrahls zur Verfestigung einer den vorgelagerten Punkt umgebenden Zone der Pulverschicht die folgenden Schritte enthält :

- Berechnung für jeden vorgelagerten Punkt einer Dauer, die die Emission eines Laserstrahls zur Verfestigung einer den vorgelagerten Punkt umgebenden Zone der Pulverschicht und den Durchgang des Laserstrahls am Untersuchungspunkt trennt,
- Vergleich der Dauer mit einer vorbestimmten Dauer zeitlicher Nachbarschaft,
- Nullschätzung für jeden vorgelagerten Punkt, dessen berechnete Dauer größer ist als die Dauer zeitlicher Nachbarschaft, einer Temperaturschwankung des Pulvers am Berechnungspunkt aufgrund der Emission eines Laserstrahls zur Verfestigung einer den vorgelagerten Punkt umgebenden Zone der Pulverschicht.

10. Verfahren zur selektiven additiven Fertigung eines dreidimensionalen Objekts ausgehend von einer Pulverschicht, wobei das Verfahren in einem Gerät zur selektiven additiven Fertigung die folgenden Schritte enthält:

- Aufbringen einer Pulverschicht zur additiven Fertigung auf einen Träger oder auf eine vorher verfestigte Schicht,
- Emission eines Laserstrahls auf die Pulverschicht entlang einer Trajektorie bestehend aus einer Vielzahl benachbarter Pfade, wobei der Durchgang des Laserstrahls auf diesen Pfaden ein Schmelzen der Pulverschicht bewirkt, wobei das Verfahren **dadurch gekennzeichnet ist, dass** die Trajektorie durch die Durchführung eines Verfahrens nach einem der Ansprüche 1 bis 9 bestimmt wird, wobei die Trajektorie gespeichert und/oder an eine Kontrolleinheit des Geräts zur selektiven additiven Fertigung übertragen wird.

11. Gerät zur selektiven additiven Fertigung (121) eines dreidimensionalen Objekts (122) ausgehend von einer Pulverschicht, wobei das Gerät enthält:

einen Pulverbehälter (127), der sich über einer waagrechten Platte (123) befindet,
eine Anordnung (124) zur Verteilung des metallischen Pulvers auf der Platte, die geeignet ist, mehrere Pulverschichten nacheinander auszubreiten,
eine Quelle (1212) vom Typ Laser und eine Kontrolleinheit (129), die geeignet ist, die Quelle vom Typ Laser zu steuern, um einen Laserstrahl auf die Pulverschicht entlang einer Trajektorie zu emittieren, die aus einer Vielzahl benachbarter Pfade besteht, wobei der Durchgang des Laserstrahls auf diesen Pfaden ein Schmelzen der Pulverschicht bewirkt, Speichereinrichtungen (M), die mit der Kontrolleinheit dialogisieren und in denen eine bestimmte Trajektorie gespeichert wird, indem ein Verfahren nach einem der Ansprüche 1 bis 9 durchgeführt wird.

12. Gerät zur selektiven additiven Fertigung nach Anspruch 11, das außerdem einen Rechner (C) enthält, der zur Durchführung eines Verfahrens zur Bestimmung einer Trajektorie nach einem der Ansprüche 1 bis 9 geeignet ist.

13. Computerprogramm, das Anweisungen enthält, die für die Durchführung mindestens eines der Schritte des Verfahrens nach einem der Ansprüche 1 bis 9 geeignet sind, wenn das Programm auf einem Computer ausgeführt wird.

**Claims**

1. Method (P) for determining trajectory followed by a laser beam for selective additive manufacture of a three-dimensional object, the laser beam being intended to be emitted toward a layer of powder and moved along a trajectory made up of a plurality of adjacent paths in order to cause the layer of powder to melt, **characterized in that** the paths are determined by implementing the following steps:

a) determining on a predetermined reference path ($T_i$) a plurality of reference points ($T_{ij}$),
b) determining a plurality of adjacent points ($T_{i+1j}$) located on the same side of the reference path, each adjacent point ($T_{i+1j}$) being associated with a reference point ($T_{ij}$), a simulated adjacent melt zone surrounding said adjacent point ($T_{i+1j}$) and a simulated reference melt zone surrounding the reference point ($T_{ij}$), the determination of the adjacent points ($T_{i+1j}$) comprising successively for each adjacent point ($T_{i+1j}$) in one direction of travel of the trajectory the following steps:

- estimating for the reference point ($T_{ij}$) associated with the adjacent point ($T_{i+1j}$) a transverse width ($L_{ij}$) of the reference simulated melt zone,
- determining a possible position of the adjacent point ($T_{i+1j}$), the distance separating the possible position of the adjacent point ($T_{i+1j}$) from the position of the reference point ($T_{ij}$) being equal to the product of the transverse width of the reference simulated melt zone and of a predetermined target degree of overlap ($\alpha c$), the adjacent point ($T_{i+1j}$) being placed with respect to the reference point ($T_{ij}$) in a direction that is orthogonal to the reference path ($T_i$) at the reference point ($T_{ij}$), comprised in the plane of the layer of powder and directed from the reference path ($T_i$) toward the adjacent path ($T_{i+1}$),
- carrying out in a loop the following secondary steps:

-- estimating a possible transverse width ($L_{i+1j}$) of the simulated adjacent melt zone,

24

-- estimating a possible overlap between the reference simulated melt zone and the adjacent simulated melt zone,

-- resuming the loop of secondary steps while modifying the possible position of the adjacent point $(T_{i+1j})$ if the estimated possible overlap corresponds to a fraction of the simulated reference melt zone less than the predetermined minimum fraction or greater than the predetermined maximum fraction,

c) determining an adjacent path $(T_{i+1})$ passing through the plurality of determined adjacent points,

d) iterating steps a) to c) using the adjacent path, defined as a new reference path, so as to determine, on each iteration, a new adjacent path, all of the adjacent paths thus determined defining the trajectory intended to be followed by the laser beam, said trajectory being stored and/or transmitted to a control unit of a selective-additive-manufacturing apparatus.

2. Method (P) for determining trajectory followed by a selective-additive-manufacturing laser beam according to Claim 1, further comprising determining a dissimilarity between the estimated possible overlap and a target overlap equal to the product of the transverse width of the reference simulated melt zone and of the target degree of overlap ($\alpha$c).

3. Method (P) for determining trajectory followed by a selective-additive-manufacturing laser beam according to Claim 2, wherein the target degree of overlap ($\alpha$c) is equal to 15%, the minimum fraction ($\alpha$min) is equal to 12% and the maximum fraction ($\alpha$max) is equal to 18%.

4. Method (P) for determining trajectory followed by a selective-additive-manufacturing laser beam according to one of Claims 2 to 3, wherein to estimate a possible overlap between the reference simulated melt zone and the simulated adjacent melt zone, the half-sum of a transverse width of the reference simulated melt zone and of a possible transverse width of the simulated adjacent melt zone subtracted from the distance separating the possible position of the adjacent point $(T_{i+1j})$ and the position of the reference point $(T_{ij})$ is determined.

5. Method (P) for determining trajectory followed by a selective-additive-manufacturing laser beam according to one of Claims 2 to 4, wherein, when resuming the loop of secondary steps, the possible position of the adjacent point $(T_{i+1j})$ is modified so that the distance separating the possible position of the adjacent point $(T_{i+1j})$ and the position of the reference point $(T_{ij})$ is replaced by the difference between said distance and the dissimilarity between the estimated possible overlap and the product of the transverse width of the reference simulated melt zone and of the target degree of overlap.

6. Method (P) for determining trajectory followed by a selective-additive-manufacturing laser beam according to one of Claims 1 to 5, wherein the step of estimating a transverse width of a simulated melt zone that surrounds a study point located on the layer of powder, comprises the following steps:

- determining a plurality of computation points, the computation points being points of the layer of powder that are located in a neighbourhood of the study point,
- estimating a maximum temperature reached at each of the computation points, the estimate depending on variations in temperature due to emission of a laser beam so as to consolidate zones of the layer of powder surrounding upstream points located on the plurality of paths upstream of a passage of the laser beam to the study point, and the estimate depending on a variation in temperature of the powder at the computation point due to emission of a laser beam so as to consolidate a zone of the layer of powder surrounding the study point,
- comparing the maximum temperature reached thus estimated with the melting point of the powder,
- identifying, among the computation points, melted points for which the estimate of the maximum temperature reached is greater than or equal to the melting point of the powder,
- estimating a transverse width of a zone occupied by said melted points.

7. Method (P) for determining trajectory followed by a selective-additive-manufacturing laser beam according to Claim 6, wherein the step of estimating a maximum temperature at a computation point comprises the following steps:

- computing, for each upstream point, an estimate of a variation in temperature of the powder at the computation point due to emission of a laser beam so as to consolidate a zone of the layer of powder surrounding the upstream point,
- computing an estimate of variations in temperature of the powder at the computation point due to emission of a laser beam so as to consolidate zones of the layer of powder surrounding upstream points,
- computing an estimate of a variation in temperature of the powder at the computation point due to emission of a laser beam so as to consolidate a zone of the layer of powder surrounding the study point,
- computing an estimate of a temperature of the powder at the computation point depending on the estimates of the variations in temperature due to emission of a laser beam so as to consolidate zones of the layer of powder surrounding the study point or upstream points,
- computing an estimate of a maximum temperature at the computation point.

8. Method (P) for determining trajectory followed by a selective-additive-manufacturing laser beam according to Claim 6 or 7, wherein the step of estimating, for each upstream point, an estimate of a variation in temperature of the powder at the computation point due to emission of a laser beam so as to consolidate a zone of the layer of powder surrounding the upstream point comprises the following steps:

- computing, for each upstream point, a distance separating the study point and said upstream point,
- comparing said distance to a predetermined spatial-neighbourhood distance,
- estimating as zero, for each upstream point separated from the study point by a distance greater than the spatial-neighbourhood distance, a variation in temperature of the powder at the computation point due to emission of a laser beam so as to consolidate a zone of the layer of powder surrounding the upstream point.

9. Method (P) for determining trajectory followed by a selective-additive-manufacturing laser beam according to any one of Claims 6 to 8, wherein the step of estimating, for each upstream point, an estimate of a variation in temperature of the powder at the computation point due to emission of a laser beam so as to consolidate a zone of the layer of powder surrounding the upstream point comprises the following steps:

- computing, for each upstream point, a duration separating emission of a laser beam so as to consolidate a zone of the layer of powder surrounding the upstream point and the passage of the laser beam to the study point,
- comparing said duration to a predetermined temporal-neighbourhood duration,
- estimating as zero, for each upstream point the computed duration of which is greater than the temporal-neighbourhood duration, a variation in temperature of the powder at the computation point due to emission of a laser beam so as to consolidate a zone of the layer of powder surrounding the upstream point.

10. Process for selective additive manufacture of a three-dimensional object from a layer of powder, the process comprising, in a selective-additive-manufacturing apparatus, the following steps:

- applying a layer of additive-manufacturing powder to a carrier or to a previously consolidated layer,
- emitting a laser beam onto the layer of powder following a trajectory made up of a plurality of adjacent paths, the passage of the laser beam over these paths causing the layer of powder to melt,

the process being **characterized in that** the trajectory is determined by implementing a method according to one of Claims 1 to 9, said trajectory being stored and/or transmitted to a control unit of the selective-additive-manufacturing apparatus.

11. Selective-additive-manufacturing apparatus (121) for selective additive manufacture of a three-dimensional object (122) from a layer of powder, the apparatus comprising:

a powder reservoir (127) located above a horizontal plate (123),
an arrangement (124) for distributing said metal powder to the plate, and configured to successively spread a plurality of layers of powder,
a laser source (1212), a control unit (129) that is configured to control the laser source so as to emit a laser beam onto the layer of powder following a trajectory made up of a plurality of adjacent paths, the passage of the laser beam over these paths causing the layer of powder to melt, and a memory (M) that communicates with the control unit and in which a trajectory determined by implementing a method according to one of Claims 1 to 9 is stored.

12. Selective-additive-manufacturing apparatus according to Claim 11 further comprising a computer (C) configured to implement a trajectory-determining method according to one of Claims 1 to 9.

13. Computer program comprising instructions suitable for implementing at least one of the steps of the method according to any one of Claims 1 to 9 when said program is executed on a computer.

Figure 1

Figure 2

## Figure 3

## Figure 4

P

détermination sur un chemin de référence Ti prédéterminé
de plusieurs points de référence Tij

a)

détermination de plusieurs points adjacent Ti+1j, le chevauchement entre
une zone de fusion simulée de référence et une zone de fusion simulée adjacente
étant une faction de la zone de fusion simulée de référence
comprise entre une fraction minimale et une faction maximale

b)

détermination d'un chemin adjacent Ti+1
passant par les plusieurs points adjacents déterminés

c)

itération des étapes a) à c) en utilisant le chemin adjacent déterminé
comme nouveau chemin de référence

d)

Figure 5

```
┌─────────────┐ ┌──────────────────┐ ┌─────────────┐ ┌──────────────────────┐
│ Paramètres  │ │Propriétés physiques│ │  Chemin de  │ │ Fraction minimale αmin│
│ du procédé  │ │  du matériau     │ │ référence T₁│ │ Fraction maximale α max│
└─────────────┘ └──────────────────┘ └─────────────┘ └──────────────────────┘
```

- i = 1
- Simulation thermique sur le chemin Ti
- Calcul de largeur de la zone de fusion Lij en chaque point de référence Tij
- Calcul d'une position possible d'un point adjacent Ti+1j pour chaque j
- j = 1
- j = j+1
- i = i+1
- Simulation thermique jusqu'au point Ti+1j
- Modification de la position possible du point adjacent Ti+1j
- Estimation d'un taux de chevauchement αij pour les points Tij et Ti+1j
- αmin ≤ αij ≤ αmax — NOK / OK
- j = j final — NOK / OK
- i = i final — NOK / OK

Figure 6

Figure 7

Figure 8

Figure 9

Figure 10

Figure 11

Figure 12

Figure 13

Figure 14

Figure 15

Figure 16

Figure 17

Figure 18

Figure 19

Figure 20

Figure 21

Figure 22

```
Mise en mémoire :   - des paramètres du procédé
                    - des paramètres du matériau
                    - d'une trajectoire
```

↓

```
Estimation du champ de température dans un domaine spatial
prédéfini à un instant prédéfini
```

↓

```
Détermination d'une courbe isotherme fermée sur elle-même
correspondant à une élévation en température prédéfinie
```

↓

```
Détermination d'un voisinage spatial comme une distance
maximale entre deux points de la courbe isotherme
dans la direction perpendiculaire à la trajectoire
```

↓

```
Détermination d'un voisinage temporel comme un rapport sur la
vitesse de balayage d'une distance maximale entre deux points
de la courbe isotherme dans la direction de la trajectoire
```

Figure 23

Figure 24

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2019054567 A1